# EUROPEAN PATENT APPLICATION

(11) **EP 4 580 271 A1**
(43) Date of publication of application: **02.07.2025**
(21) Application number: 22955961.2
(22) Date of filing: 22.08.2022
(51) Int. Cl.: H04W 72/00

(54) **METHOD AND APPARATUS FOR DETERMINING CHANNEL BUSY RATIO (CBR)**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/114063
(87) International publication number: WO 2024/040412

(57) **Abstract**

The embodiments of the present disclosure can be applied to the technical field of communications. Disclosed are a method and apparatus for determining a channel busy ratio (CBR). The method, which is executed by a terminal device, comprises: in response to a condition of triggering carrier selection or carrier reselection being satisfied, determining a CBR which corresponds to a resource pool, wherein at least one resource pool is configured on an activated BWP of a carrier; and determining the CBR of the carrier according to the CBR which corresponds to the resource pool. Thus, a terminal device can determine the CBR of a carrier during carrier selection and/or carrier reselection.

## Description

### TECHNICAL FIELD

The disclosure relates to the field of communication technology, more particularly, to a method and device for determining a channel busy ratio (CBR).

### BACKGROUND

In order to support direct communication between terminals, a sidelink communication method is introduced. The sidelink communication has two transmission resource allocation modes, in which one is a mode of dynamic scheduling by a network device (mode 1), and the other is a mode in which the terminal autonomously selects from resource pools broadcast by the network device (mode 2).

The terminal can perform carrier selection and/or carrier reselection to determine the transmission resource to be used. A CBR (channel busy ratio) can be used as an indicator for carrier selection and/or carrier reselection. The CBR is a parameter that measures an occupancy situation of sub channels on a frequency band. The terminal can perform a CBR measurement on a resource pool used to transmit data according to a configuration of the network device. The lower the CBR measurement value, the fewer the terminals occupying the sub channels of the resource pool for data transmission are, and the lower the conflict possibility of selecting this resource pool to send data is.

In the related art, the terminal performs the CBR measurement on the resource pool, and the obtained CBR is a CBR of the resource pool. How to determine a CBR of a carrier during the process of carrier selection and/or carrier reselection is an urgent problem that needs to be solved.

### SUMMARY

Embodiments of the present disclosure provide a method and device for determining a channel busy ratio (CBR), which can be applied to the Internet of Vehicles, such as vehicle to everything (V2X) communication, and long term evolution-vehicle ( LTE-V) technology, vehicle to vehicle (V2V) communication, etc., or can be applied to fields such as smart driving and intelligent connected vehicles. The terminal can determine the CBR of a carrier during a process of carrier selection and/or carrier reselection.

A first aspect of embodiments of the disclosure provides a method for determining a channel busy ratio (CBR). The method is performed by a terminal and includes: in response to a condition for triggering carrier selection or carrier reselection being met, determining a CBR corresponding to a resource pool; in which an activated partial bandwidth (BWP) of a carrier is configured with at least one resource pool; and determining a CBR of the carrier according to the CBR corresponding to the resource pool.

In this technical solution, the terminal determines the CBR corresponding to the resource pool in response to the condition for triggering carrier selection or carrier reselection being met. The activated BWP of the carrier is configured with at least one resource pool. The CBR of the carrier is determined according to the CBR corresponding to the resource pool.

A second aspect of embodiments of the disclosure provides a method for determining a channel busy ratio (CBR). The method is performed by a network device and includes: sending first indication information and/or second indication information to a terminal, in which the first indication information is configured to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met; the second indication information is configured to indicate a default resource pool, and the default resource pool is used by the terminal to determine the CBR of the carrier in a case that the condition for triggering the carrier selection or the carrier reselection is met.

According to a third aspect of embodiments of the disclosure, a communication device is provided. The communication device has some or all of the functions of the terminal for implementing the method described in the first aspect. For example, the functions of the communication device may have some or all of the functions of the present disclosure, or may have functions of independently implementing any of the embodiments of the present disclosure. The functions can be implemented by hardware, or can be implemented by hardware executing corresponding software. The hardware or software includes one or more units or modules corresponding to the above functions.

In an implementation, a structure of the communication device may include a transceiver module and a processing module, and the processing module is configured to support the communication device to perform corresponding functions in the above methods. The transceiver module is configured to support communication between the communication device and other devices. The communication device may further include a storage module coupled to the transceiver module and the processing module, which stores necessary computer programs and data for the communication device.

In an implementation, the communication device includes: a processing module configured to determine a CBR corresponding to a resource pool in response to a condition for triggering carrier selection or carrier reselection being met, in which a partial bandwidth (BWP) activated by one carrier activation is configured with at least one resource pool; the processing module is also configured to determine a CBR of a carrier according to the CBR corresponding to the resource pool.

According to a fourth aspect of embodiments of the disclosure, a communication device is provided. The communication device has some or all of the functions of the network device for implementing the method described in the second aspect. For example, the functions of the communication device may have some or all of the functions of the present disclosure, or may have functions of independently implementing any of the embodiments of the present disclosure. The functions can be implemented by hardware, or can be implemented by hardware executing corresponding software. The hardware or software includes one or more units or modules corresponding to the above functions.

In an implementation, a structure of the communication device may include a transceiver module and a processing module, and the processing module is configured to support the communication device to perform corresponding functions in the above methods. The transceiver module is configured to support communication between the communication device and other devices. The communication device may further include a storage module coupled to the transceiver module and the processing module, which stores necessary computer programs and data for the communication device.

In an implementation, the communication device includes: a processing module configured to: the first indication information is configured to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met determine a CBR corresponding to a resource pool; the second indication information is configured to indicate a default resource pool, and the default resource pool is used by the terminal to determine the CBR of the carrier in a case that the condition for triggering the carrier selection or the carrier reselection is met.

According to a fifth aspect of embodiments of the disclosure, a communication device is provided. The communication device includes a processor. When the processor calls a computer program in a memory, the method described in the first aspect is performed.

According to a sixth aspect of embodiments of the disclosure, a communication device is provided. The communication device includes a processor. When the processor calls a computer program in a memory, the method described in the second aspect is performed.

According to a seventh aspect of embodiments of the disclosure, a communication device is provided. The communication device includes a processor and a memory, and a computer program is stored in the memory. The processor executes the computer program stored in the memory, so that the communication device executes the method described in the first aspect above.

According to an eighth aspect of embodiments of the disclosure, a communication device is provided. The communication device includes a processor and a memory, and a computer program is stored in the memory. The processor executes the computer program stored in the memory, so that the communication device executes the method described in the second aspect above.

According to a ninth aspect of embodiments of the disclosure, a communication device is provided. The communication device includes a processor and an interface circuit. The interface circuit is used to receive code instructions and transmit them to the processor. The processor is used to run the code instructions to cause the device to perform the method described in the first aspect.

According to a tenth aspect of embodiments of the disclosure, a communication device is provided. The communication device includes a processor and an interface circuit. The interface circuit is used to receive code instructions and transmit them to the processor. The processor is used to run the code instructions to cause the device to perform the method described in the second aspect.

According to an eleventh aspect of embodiments of the disclosure, a random access system is provided. The random access system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

According to a twelfth aspect of embodiments of the disclosure, a computer-readable storage medium is provided. The computer-readable storage medium is used to store instructions used by the above-mentioned terminal. When the instructions are executed, the terminal is caused to execute the above-mentioned method in the first aspect.

According to a thirteenth aspect of embodiments of the disclosure, a readable storage medium is provided. The readable storage medium is used to store instructions used by the above-mentioned network device. When the instructions are executed, the network device is caused to execute the above-mentioned method in the second aspect.

According to a fourteenth aspect of embodiments of the disclosure, a computer program product including a computer program is provided. When the computer program runs on a computer, the computer is caused to execute the method described in the first aspect.

According to a fifteenth aspect of embodiments of the disclosure, a computer program product including a computer program is provided. When the computer program runs on a computer, the computer is caused to execute the method described in the second aspect.

According to a sixteenth aspect of embodiments of the disclosure, a chip system is provided. The chip system includes at least one processor and an interface, for supporting a terminal to implement the functions involved in the first aspect, for example, determining or processing at least one of data or information involved in the above methods. In a possible design, the chip system further includes a memory, and the memory is used to store necessary computer programs and data for the terminal. The chip system may be composed of chips, or may include chips and other discrete devices.

According to a seventeenth aspect of embodiments of the disclosure, a chip system is provided. The chip system includes at least one processor and an interface, for supporting a network device to implement the functions involved in the second aspect, for example, determining or processing at least one of data or information involved in the above methods. In a possible design, the chip system further includes a memory, and the memory is used to store necessary computer programs and data for the network device. The chip system may be composed of chips, or may include chips and other discrete devices.

According to an eighteenth aspect of embodiments of the disclosure, a computer program is provided. When it runs on a computer, the computer is caused to perform the method described in the first aspect.

According to a nineteenth aspect of embodiments of the disclosure, a computer program is provided. When it runs on a computer, the computer is caused to perform the method described in the second aspect.

### BRIEF DESCRIPTION OF THE DRAWINGS

In order to more clearly illustrate the technical solutions in embodiments of the disclosure or the background technology, the accompanying drawings required to be used in the embodiments or the background technology of the disclosure will be described below.
FIG. 1 is an architectural diagram of a communication system provided by an embodiment of the present disclosure.
FIG. 2 is a flow chart of a method for determining a channel busy ratio (CBR) provided by an embodiment of the present disclosure.
FIG. 3 is a flow chart of a method for determining a CBR provided by an embodiment of the present disclosure.
FIG. 4 is a flow chart of a method for determining a CBR provided by an embodiment of the present disclosure.
FIG. 5 is a flow chart of a carrier selection method provided by an embodiment of the present disclosure.
FIG. 6 is a flow chart of a carrier selection method provided by an embodiment of the present disclosure.
FIG. 7 is a flow chart of a carrier selection method provided by an embodiment of the present disclosure.
FIG. 8 is a flow chart of a carrier selection method provided by an embodiment of the present disclosure.
FIG. 9 is a flow chart of a method for determining a CBR provided by an embodiment of the present disclosure.
FIG. 10 is a flow chart of a carrier selection method provided by an embodiment of the present disclosure.
FIG. 11 is a block diagram of a communication device provided by an embodiment of the present disclosure;
FIG. 12 is a block diagram of a communication device provided by an embodiment of the present disclosure;
FIG. 13 is a block structural diagram of a chip provided by an embodiment of the present disclosure.

### DETAILED DESCRIPTION

In order to better understand the method for determining a channel busy ratio (CBR) according to embodiments of the present disclosure, a communication system to which embodiments of the present disclosure are applied is first described below.

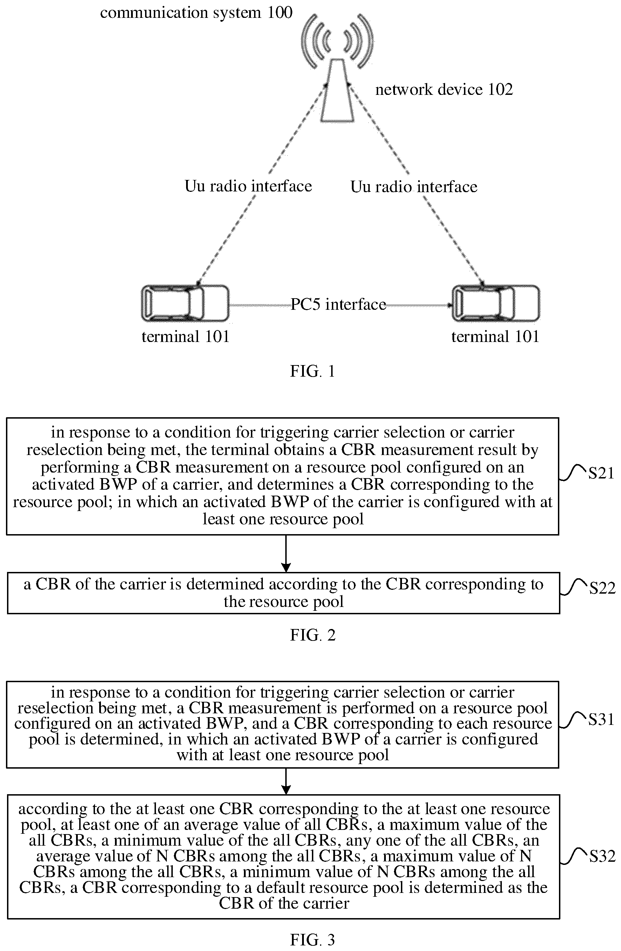

FIG. 1 shows a communication system 100 to which embodiments of the present disclosure are applicable. The communication system 100 may be a long term evolution (LTE) system, a fifth generation (5G) communication system, a new radio (NR) communication system, or a machine to machine (M2M) communication system, an Internet of Vehicles communication system, a device-to-device (D2D) communication system, a sixth-generation communication system or subsequent future evolution communication systems, etc.

As shown in FIG. 1, the communication system 100 may include: at least one terminal 101. Communication between the terminals 101 can be performed through a wireless interface (such as a PC5 interface). On the PC5 interface, a link for transmitting data between the terminals 101 may be called a side link (SL). The side link in embodiments of the present disclosure may also be called a sidelink or a direct link.

SL communication is generally used in device direct communication scenarios such as vehicle to everything (V2X) or D2D. V2X refers to connecting vehicles to the Internet or connecting vehicles and the Internet, including four different types of applications, namely vehicle to vehicle (V2V), vehicle to infrastructure (V2I), vehicle to network (V2N), and vehicle to pedestrian (V2P), etc. Through these four applications, vehicles, roadside infrastructure, application servers and pedestrians can collect, process and share status information of surrounding vehicles and the environment, to provide more intelligent services, such as unmanned driving, automated driving, driver assistance, intelligent driving, connected driving, intelligent network driving, car sharing, etc.

Optionally, the communication system 100 shown in FIG. 1 may also include a network device (network side device) 102. A communication interface between the network device 102 and the terminal 101 is a Uu radio interface. The network device 102 may communicate with the terminal 101 through the Uu radio interface under the control of a network device controller (not shown), such as a base station controller (BSC).

The network device 102 in embodiments of the present disclosure is an entity on a network side that is used to transmit or receive signals. For example, the network device 102 may be an evolved base station (evolved NodeB, eNB), a transmission reception point (TRP), a next generation base station (next generation NodeB, gNB) in an NR system, or base stations in other future mobile communication systems or access nodes in wireless fidelity (WiFi) systems, etc. The embodiments of the present disclosure do not limit the specific technologies and specific device forms used by the base station. The base station provided by embodiments of the present disclosure may be composed of a centralized unit (CU) and distributed units (DUs). The CU may also be called a control unit. By using the CU-DU structure, the protocol layer of the base station, such as the base station, can be separated, with some functions of the protocol layer placed on the CU for centralized control, and part of or all the remaining functions of the protocol layer are distributed in the DUs, and the DUs are centrally controlled by the CU.

The terminal 101 in embodiments of the present disclosure is an entity on a user side for receiving or transmitting signals, such as a mobile phone. Terminal may also be called a terminal device, user equipment (UE), a mobile station (MS), a mobile terminal (MT), etc. The terminal can be a car with communication functions, a smart car, a mobile phone, a wearable device, a tablet (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technology and specific device forms used by the terminal.

It can be understood that the communication system described in embodiments of the present disclosure is to more clearly illustrate the technical solutions of the embodiments of the present disclosure, and does not constitute a limitation on the technical solutions provided by the embodiments of the present disclosure. As those skilled in the art may know, with the evolution of system architecture and the emergence of new service scenarios, the technical solutions provided by the embodiments of the present disclosure are also applicable to similar technical problems.

A method and device for determining a CBR provided by the present disclosure will be introduced in detail below with reference to the accompanying drawings.

In order to support direct communication between terminals, a sidelink communication mode is introduced. An interface between the terminals is PC-5. According to the corresponding relationship between the sending terminal and receiving terminal, three transmission modes are supported on the sidelink, i.e., unicast, multicast and broadcast.

The sidelink communication has two transmission resource allocation modes, in which one is a mode of dynamic scheduling by a network device (mode 1), and the other is a mode in which the terminal autonomously selects from resource pools broadcast by the network device (mode 2). Dynamic scheduling means that the network device dynamically allocates a transmission resource on the sidelink to the terminal based on buffered data reported by the terminal, while the autonomous selection means that the terminal randomly selects a transmission resource from the resource pools broadcast or preconfigured by the network device. Which allocation mode is used is configured by the network device through RRC (Radio Resource Control) signaling.

CBR (channel busy ratio) is a parameter that measures an occupancy situation of sub channels on a frequency band. The terminal performs a CBR measurement on a transmission resource pool according to a configuration of the network device. The measurement value of CBR The lower the CBR measurement value, the fewer the UEs occupying the sub channels of the resource pool for data transmission are, and the lower the conflict possibility of selecting this resource pool to send data is. One carrier in LTE V2X can support one (transmission) resource pool, and one carrier in NR sidelink can support one or more (transmission) resource pools. The UE can perform CBR measurements on multiple transmission resource pools, respectively.

In the related art, the terminal performs the CBR measurement on the resource pool, and the obtained CBR is a CBR of the resource pool. How to determine a CBR of a carrier during the process of carrier selection and/or carrier reselection is problem.

In embodiments of the present disclosure, a method and device for determining a CBR are provided. The terminal determines a CBR corresponding to a resource pool in response to a condition for triggering carrier selection or carrier reselection being met, in which a partial bandwidth (BWP) activated by one carrier is configured with at least one resource pool. The CBR of the carrier can be determined according to the CBR corresponding to the resource pool, thus the CBR of the carrier can be determined during the process of carrier selection and/or carrier reselection.

It should be noted that embodiments of the present disclosure enumerate multiple implementations to clearly illustrate the technical solutions of the embodiments of the present disclosure. Those skilled in the art can understand that the multiple embodiments provided in the embodiments of the present disclosure can be executed alone or in combination with the methods of other embodiments in the embodiments of the present disclosure. They, separately or in combination, can also be executed together with some methods in the related art, and the embodiments of the present disclosure do not limit this.

As shown in FIG. 2, FIG. 2 is a flow chart of a method for determining a CBR provided by an embodiment of the present disclosure.

As shown in FIG. 2, the method is executed by a terminal. The method may include but is not limited to the following steps.

At S21, in response to a condition for triggering carrier selection or carrier reselection being met, the terminal obtains a CBR measurement result by performing a CBR measurement on a resource pool configured on an activated BWP of a carrier, and determines a CBR corresponding to the resource pool; in which an activated BWP of the carrier is configured with at least one resource pool.

At S22, a CBR of the carrier is determined according to the CBR corresponding to the resource pool.

It is understandable that in order to meet the requirements for single-user peak rate and system capacity improvement, a method to increase system transmission bandwidth is proposed, such as CA (Carrier Aggregation). The CA technology can aggregate multiple component carriers (CC) together, which can effectively improve uplink and downlink transmission rates.

In embodiments of the present disclosure, LTE V2X or NR V2X or V2X of other communication systems support sidelink carrier aggregation. For the transmission mode of autonomously selecting resources, the terminal can perform carrier selection and/or carrier reselection of the carrier for data transmission.

The condition for triggering the carrier selection can be a condition that triggers resource selection, or it can also be any other conditions that require carrier selection. The condition for triggering the carrier reselection can be a condition that triggers resource reselection, or it can also be any other conditions that require carrier reselection, which is not specifically limited in embodiments of the disclosure.

In embodiments of the present disclosure, an HARQ (hybrid automatic repeat request) process of the terminal can trigger the terminal to perform the carrier selection. The HARQ process of the terminal can trigger the terminal to perform the carrier reselection.

In some possible implementations, one BWP is activated for one carrier in NR V2X and/or V2X of other communication systems, and one resource pool is configured on one BWP.

In this case, when the condition for triggering the carrier selection or carrier reselection, the terminal can perform the CBR measurement on the resource pool to determine the CBR corresponding to the resource pool. An activated BWP of a carrier is configured with one resource pool, and the CBR of the carrier is determined based on the CBR corresponding to the resource pool. The CBR of the carrier can be determined to be the CBR corresponding to the resource pool. Thus, the CBR of the carrier can be determined during the carrier selection and/or carrier reselection process.

In other possible implementations, for example, one BWP is activated for one carrier in NR V2X, and multiple resource pools are configured on one BWP, or multiple BWPs are activated for one carrier in NR V2X and/or V2X of other communication systems, and one resource pool is configured on one BWP.

In this case, one carrier corresponds to multiple resource pools. When the condition for triggering the carrier selection or carrier reselection, the terminal can perform the CBR measurement on each resource pool and obtain multiple CBRs corresponding to the multiple resource pools. Based on this, a maximum value/a minimum value/an average value/any one/a specified one/a maximum value of a part/a minimum value of a part /an average value of a part of the multiple CBRs, etc., can be determined as the CBR of the carrier. Thus, the CBR of the carrier can be determined during the carrier selection and/or carrier reselection process.

By implementing the embodiments of the present disclosure, the terminal determines the CBR corresponding to the resource pool in response to the condition for triggering the carrier selection or carrier reselection being met, in which at least one resource pool is configured on an activated BWP of a carrier; the CBR of the carrier is determined according to CBR corresponding to the resource pool. Therefore, the terminal can determine the CBR of the carrier during the process of carrier selection and/or carrier reselection.

In some embodiments, determining the CBR corresponding to the resource pool by the terminal includes: obtaining a CBR measurement result by performing a CBR measurement on each resource pool configured on the activated BWP, and determining the CBR corresponding to each resource pool.

In embodiments of the present disclosure, when the terminal determines the CBR corresponding to the resource pool, it can perform the CBR measurement on the resource pool configured on the activated BWP to obtain the CBR measurement result, and determines the CBR corresponding to each resource pool.

In some embodiments, determining the CBR of the carrier according to the CBR corresponding to the resource pool includes at least one of the following:
determining an average value of CBRs corresponding to all resource pools as the CBR of the carrier;
determining a maximum value among the CBRs corresponding to all the resource pools as the CBR of the carrier;
determining a minimum value among the CBRs corresponding to all the resource pools as the CBR of the carrier;
randomly selecting one CBR from the CBRs corresponding to all the resource pools as the CBR of the carrier;
randomly selecting N CBRs from the CBRs corresponding to all the resource pools, and determining an average value of the N CBRs as the CBR of the carrier, where N is a positive integer;
randomly selecting N CBRs from the CBRs corresponding to all the resource pools, and determining a maximum value among the N CBRs as the CBR of the carrier, where N is a positive integer;
randomly selecting N CBRs from the CBRs corresponding to all the resource pools, and determining a minimum value among the N CBRs as the CBR of the carrier, where N is a positive integer; or
determining a default resource pool among all the resource pools, and determining a CBR corresponding to the default resource pool as the CBR of the carrier.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools, and the average value of the CBRs corresponding to all measured resource pools is determined as the CBR of the carrier.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools, and the maximum value among the CBRs corresponding to all measured resource pools is determined as the CBR of the carrier.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools, and the minimum value among the CBRs corresponding to all measured resource pools is determined as the CBR of the carrier.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools, and one CBR is randomly selected from the CBRs corresponding to all measured resource pools as the CBR of the carrier.

It should be noted that the terminal can randomly select one of the CBRs corresponding to all measured resource pools based on implementation and determine it as the CBR of the carrier, or it can also randomly select one of the CBRs corresponding to all measured resource pools based on an instruction from the network device and determine it as the CBR of the carrier. Embodiments of the disclosure do not limit this.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools. The N CBRs are randomly selected from the CBRs corresponding to all measured resource pools, and an average value of the N CBRs corresponding to the N resource pools is determined as the CBR of the carrier, and N is a positive integer.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools. The N CBRs are randomly selected from the CBRs corresponding to all measured resource pools, and the maximum value of the N CBRs corresponding to the N resource pools is determined as the CBR of the carrier, and N is a positive integer.

In embodiments of the present disclosure, the terminal performs the CBR measurement on the one or more resource pools configured on the activated BWP to obtain the CBR measurement result. The CBR of the carrier can be determined based on the one or more CBRs corresponding to the one or more resource pools. The N CBRs are randomly selected from the CBRs corresponding to all measured resource pools, and the minimum value of the N CBRs corresponding to the N resource pools is determined as the CBR of the carrier, and N is a positive integer.

It should be noted that the terminal may determine the number N of selected CBRs corresponding to the resource pools based on implementation, or may determine the number N of selected CBRs corresponding to the resource pools according to an instruction from the network device, or may determine the number N of selected CBRs corresponding to the resource pools based on pre-configuration, which is not specifically limited in embodiments of the disclosure.

In some embodiments, randomly selecting the N CBRs from the CBRs corresponding to all the measured resource pools by the terminal includes: receiving first indication information sent by a network device, wherein the first indication information is configured to indicate the N which is a number of CBRs randomly selected from the CBRs corresponding to all the resource pools; and determining, according to the first indication information, to randomly select the N CBRs from the CBRs corresponding to all the measured resource pools.

In embodiments of the present disclosure, the terminal randomly selects the N CBRs from the CBRs corresponding to all measured resource pools. The number N can be determined based on an instruction from the network device. For example, the first indication information sent by the network device is received. The first indication information is used to indicate the number N of CBRs randomly selected from the CBRs corresponding to all resource pools. According to the first indication information, it is determined to randomly select the N CBRs from the CBRs corresponding to all resource pools.

For example, N is 2, and the terminal receives the first indication information sent by the network device. The first indication information is used to indicate that the number of CBRs randomly selected from the CBRs corresponding to all resource pools is 2. According to the first indication information, it is determined to randomly select 2 CBRs from the CBRs corresponding to all resource pools.

In embodiments of the present disclosure, the terminal performs the CBR measurement on the resource pools configured on the activated BWP to obtain the CBR measurement result. The CBR of the carrier can be determined according to the CBRs corresponding to the resource pools. A default resource pool can be determined from the resource pools, and a CBR corresponding to the default resource pool can be determined as the CBR of the carrier.

It should be noted that the terminal may determine the default resource pool based on implementation, or may determine the default resource pool based on an instruction from the network device. Embodiments of the present disclosure do not specifically limit this.

In some embodiments, determining the default resource pool among all the resource pools by the terminal includes: receiving second indication information sent by the network device, in which the second indication information is used to indicate the default resource pool; and determining the default resource pool according to the second indication information.

In embodiments of the present disclosure, the terminal determines the default resource pool from the resource pools, and it can determine the default resource pool based on the instruction of the network device. For example, the terminal receives the second indication information sent by the network device, and the second indication information is used to indicate the default resource pool, and the terminal can determine the default resource pool according to the second indication information.

In some possible implementations, when a BWP is activated for a carrier and one BWP is configured with multiple resource pools, the second indication information sent by the network device may indicate one of the multiple resource pools configured for the BWP as the default resource pool.

For example, the second indication information may indicate an identifier of one of the multiple resource pools configured for the BWP, such as a resource pool index, which is used to indicate a default resource pool among the multiple resource pools configured for the BWP to the terminal.

For example, the second indication information may also indicate whether a resource pool is the default resource pool. For example, whether a resource pool is the default resource pool may be indicated in a resource pool configuration, for example, by adding or reusing a relevant indicator parameter. When the parameter is a first specific value, it indicates that the resource pool is the default resource pool. When the parameter is not the first specific value but it is the second specific value, it indicates that the resource pool is not the default resource pool. For example, when the indicator parameter is set to 1, it indicates that the resource pool is the default resource pool; when the indicator parameter is not 1 but it is 0, it indicates that the resource pool is not the default resource pool. For example, when the indicator parameter is set to enabled, it indicates that the resource pool is the default resource pool; when the indicator parameter is set to disable, it indicates that the resource pool is not the default resource pool.

In other embodiments, the terminal determines a default resource pool in the resource pools, performs the CBR measurement on the default resource pool, determines the CBR corresponding to the default resource pool, and determines that the CBR corresponding to the default resource pool is the CBR of the carrier.

In embodiments of the present disclosure, the method for the terminal to determine the default resource pool among the at least one resource pool configured on the activated BWP of the carrier can be referred to the relevant description in the above embodiments, and will not be described again here.

In embodiments of the present disclosure, after determining the default resource pool in the resource pools, the terminal can perform the CBR measurement on the default resource pool, determine the CBR corresponding to the default resource pool, and determine that the CBR corresponding to the default resource pool is the CBR of the carrier.

It can be understood that LTE V2X supports sidelink carrier aggregation. For the mode of autonomously selecting transmission resources, the terminal can perform the carrier selection and/or carrier reselection of the transmission carrier. In LTE V2X, the CBR is selected as a granularity of the carrier selection and/or carrier reselection, and a reselection threshold (threshCBR-FreqReselection) is introduced. When the carrier selection or carrier reselection is triggered, the terminal determines whether a certain carrier can be used as a candidate carrier by comparing a CBR measured on a certain carrier and the configured reselection threshold. The reselection threshold can be configured according to a priority granularity. That is, reselection thresholds associated with different priorities can be the same or different, depending on the configuration of the network device.

In LTE V2X, a triggering condition for resource reselection is a triggering condition for the carrier reselection, but the carrier reselection does not mean that it must be "reselected" to a new carrier. If the current carrier is more suitable, the terminal can continue to "keep" the current carrier. Therefore, in order to achieve this, a keeping threshold (threshCBR-FreqKeeping) is introduced in LTE V2X. When the carrier reselection is triggered, the terminal determines whether it can be reselected to the carrier that currently triggers the reselection by comparing the measured CBR of the carrier that currently triggers the carrier reselection and the configured keeping threshold. The keeping threshold can also be configured according to the priority granularity. That is, the keeping thresholds associated with different priorities can be the same or different, depending on the configuration of the network device.

In some embodiments, the terminal receives configuration information sent by the network device, the configuration information is used to indicate the reselection threshold for performing the carrier selection or carrier reselection, and/or the keeping threshold for performing the carrier selection or carrier reselection. According to the configuration information, the reselection threshold for performing the carrier selection or carrier reselection is determined, and/or the keeping threshold for performing the carrier selection or carrier reselection is determined.

In embodiments of the present disclosure, the terminal receives the configuration information sent by the network device, and the configuration information is used to indicate the reselection threshold for performing the carrier selection in LTE V2X or NR V2X or V2X of other communication systems. The terminal can determine the reselection threshold for performing the carrier selection based on the configuration information of the network device.

In embodiments of the present disclosure, the terminal receives the configuration information sent by the network device, and the configuration information is used to indicate the reselection threshold for performing the carrier reselection in LTE V2X or NR V2X or V2X of other communication systems. The terminal can determine the reselection threshold for performing the carrier reselection based on the configuration information of the network device.

In embodiments of the present disclosure, the terminal receives the configuration information sent by the network device, and the configuration information is used to indicate the keeping threshold for performing the carrier selection in LTE V2X or NR V2X or V2X of other communication systems. The terminal can determine the keeping threshold for performing the carrier selection based on the configuration information of the network device.

In embodiments of the present disclosure, the terminal receives the configuration information sent by the network device, and the configuration information is used to indicate the keeping threshold for performing the carrier reselection in LTE V2X or NR V2X or V2X in other communication systems. The terminal can determine the keeping threshold for performing the carrier reselection based on the configuration information of the network device.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the terminal determines whether the carrier is a candidate carrier based on the CBR of the carrier and the reselection threshold.

In embodiments of the present disclosure, when the condition for triggering the carrier selection or carrier reselection are met, the terminal can perform the CBR measurement on the resource pool configured on the activated BWP of the carrier to obtain the CBR measurement result, and determine the CBR corresponding to the resource pool, in which at least one resource pool is configured on the activated BWP of the carrier. The CBR of the carrier is determined according to the CBR corresponding to the resource pool. Further, it is determined whether the carrier is the candidate carrier based on the CBR of the carrier and the reselection threshold.

In some embodiments, the configuration information is used to indicate at least one of the following:
a reselection threshold for each cell;
a reselection threshold for each BWP;
a reselection threshold for each frequency; or
a reselection threshold for each terminal.

In embodiments of the present disclosure, the terminal receives the configuration information sent by the network device, the configuration information is used to indicate the reselection threshold for each cell for the carrier selection or carrier reselection. The reselection threshold indicated by the network device is the reselection threshold for each cell. The terminal can determine different reselection thresholds in different cells. Based on this, the terminal can determine the reselection threshold of a cell where the terminal is located. According to the CBR and the determined reselection threshold of the cell, the terminal determines whether the carrier is the candidate carrier.

In embodiments of the present disclosure, the terminal receives the configuration information sent by the network device, the configuration information is used to indicate the reselection threshold for each BWP for the carrier selection or carrier reselection. The reselection threshold indicated by the network device is the reselection threshold for each BWP. When different BWPs are activated for the carrier used by the terminal, different reselection thresholds can be determined. Based on this, the terminal can determine the reselection threshold corresponding to the BWP based on the activated BWP of the carrier. Furthermore, when the CBR of the carrier is determined based on the CBR of the resource pool configured on the activated BWP of the carrier, it is determined whether the carrier is the candidate carrier based on the CBR of the carrier and the determined reselection threshold corresponding to the activated BWP of the carrier.

In embodiments of the present disclosure, the terminal receives the configuration information sent by the network device, the configuration information is used to indicate the reselection threshold for each frequency for the carrier selection or carrier reselection. The reselection threshold indicated by the network device is the reselection threshold for each frequency. When the carrier used by the terminal is located at different frequencies, different reselection thresholds can be determined. Based on this, according to a frequency of the carrier, the terminal can determine the reselection threshold corresponding to the frequency. When the CBR of the carrier is determined based on the CBR of the resource pool configured on the activated BWP of the carrier, it is determined whether the carrier is the candidate carrier based on the CBR of the carrier and the determined reselection threshold corresponding to the frequency of the carrier.

In embodiments of the present disclosure, the terminal receives the configuration information sent by the network device, the configuration information is used to indicate the reselection threshold for each terminal that performs the carrier selection or carrier reselection. The reselection threshold indicated by the network device is the reselection threshold for each terminal. Different terminals can correspond to different reselection thresholds. Based on this, the terminal can determine its corresponding reselection threshold. When the CBR of the carrier is determined according to the CBR of the resource pool configured on the activated BWP of the carrier, whether the carrier is a candidate carrier is determined based on the CBR of the carrier and the determined reselection threshold corresponding to the terminal.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the terminal determines that the carrier is the candidate carrier in response to the CBR of the carrier being less than or equal to the reselection threshold.

In embodiments of the present disclosure, the terminal determines that the carrier is the candidate carrier when the CBR of the carrier is less than or equal to the reselection threshold.

In some embodiments, the terminal may determine that the carrier is not the candidate carrier when the CBR of the carrier is greater than or equal to the reselection threshold.

In some embodiments, the configuration information is used to indicate a reselection threshold for each priority of each cell.

In embodiments of the present disclosure, the terminal receives the configuration information sent by the network device, the configuration information is used to indicate the reselection threshold for each priority of each cell for the carrier selection or carrier reselection.

In some embodiments, the terminal determines, according to the configuration information, a reselection threshold corresponding to a priority of each logical channel where there is data to be transmitted and the carrier selection and/or carrier reselection is triggered; in response to the CBR of the carrier is less than or equal to each the reselection threshold corresponding to the priority of the logical channel where there is data to be transmitted and the carrier selection and/or carrier reselection is triggered, it is determined that the carrier is the candidate carrier.

In embodiments of the present disclosure, the terminal receives the configuration information sent by the network device, the configuration information is used to indicate the reselection threshold for each priority of each cell for performing the carrier selection or carrier reselection. The reselection threshold indicated by the network device is the reselection threshold for each priority of each cell. Priorities of different logical channels in different cells where the terminal is located can correspond to different reselection thresholds.

The terminal can determine the reselection threshold corresponding to the priority of each logical channel where there is data to be transmitted and the carrier selection and/or the carrier reselection is triggered based on the configuration information. The terminal can determine the cell where it is located and the reselection threshold corresponding to the priority of each logical channel where there is data to be transmitted and the carrier selection and/or the carrier reselection is triggered. When the CBR of the carrier is determined based on the CBR of the resource pool configured on the activated BWP of the carrier, the CBR of the carrier is compared with the determined reselection threshold corresponding to the priority of each logical channel where there is data to be transmitted and the carrier selection and/or the carrier reselection is triggered. When the CBR of the carrier is less than or equal to the determined reselection threshold corresponding to the priority of each logical channel where there is data to be transmitted and the carrier selection and/or the carrier reselection is triggered, it is determined that the carrier is the candidate carrier.

In a possible implementation, the terminal determines the reselection threshold corresponding to the priority of each logical channel where there is data to be transmitted and the carrier selection and/or carrier reselection is triggered. In the case that there is one logical channel where there is data to be transmitted and the carrier selection and/or carrier reselection is triggered, a priority can be determined and a reselection threshold corresponding to the priority can be determined. The terminal can compare the CBR of the carrier and the determined reselection threshold corresponding to the priority. If the CBR of the carrier is less than or equal to the determined reselection threshold corresponding to the priority, it is determined that the carrier is the candidate carrier.

In another possible implementation, the terminal determines the reselection threshold corresponding to the priority of each logical channel where there is data to be transmitted and the carrier selection and/or carrier reselection is triggered. In the case that there are multiple logical channels where there is data to be transmitted and the carrier selection and/or carrier reselection is triggered, multiple priorities can be determined, and a reselection threshold corresponding to each priority can be determined respectively. The terminal can compare the CBR of the carrier and the determined reselection threshold corresponding to each priority. When the CBR of the carrier is less than or equal to the all the reselection thresholds corresponding to the determined priorities, it is determined that the carrier is the candidate carrier.

In some embodiments, in response to determining that the carrier reselection is triggered based on a first carrier, the terminal performs determines whether to reselect the first carrier according to a CBR of the first carrier and the keeping threshold.

In embodiments of the present disclosure, when the carrier reselection is triggered based on the first carrier, the terminal may determine whether to reselect the first carrier based on the CBR of the first carrier and the keeping threshold.

In some embodiments, the configuration information is used to indicate at least one of the following:
a keeping threshold for each cell;
a keeping threshold for each BWP;
a keeping threshold for each frequency; or
a keeping threshold for each terminal.

In embodiments of the present disclosure, the terminal receives the configuration information sent by the network device, the configuration information is used to indicate the keeping threshold for each cell for the carrier selection or carrier reselection. The keeping threshold indicated by the network device is the keeping threshold for each cell. The terminal can determine different keeping thresholds in different cells. Based on this, the terminal can determine the keeping threshold of the cell where it is located. When the carrier reselection is triggered based on the first carrier, it may be determined whether to reselect the first carrier based on the CBR of the first carrier and the determined keeping threshold of the cell where it is located.

In embodiments of the present disclosure, the terminal receives the configuration information sent by the network device, the configuration information is used to indicate the keeping threshold for each BWP for the carrier selection or carrier reselection. The keeping threshold indicated by the network device is the keeping threshold for each BWP. When different BWPs are activated for the carrier used by the terminal, different keeping thresholds can be determined. Based on this, the terminal can determine the keeping threshold corresponding to the BWP based on the activated BWP of the first carrier. When the carrier reselection is triggered based on the first carrier, whether to reselect the first carrier can be determined based on the CBR of the first carrier and the determined keeping threshold corresponding to the activated BWP of the first carrier.

In embodiments of the present disclosure, the terminal receives the configuration information sent by the network device, the configuration information is used to indicate the keeping threshold for each frequency for carrier selection or carrier reselection. The keeping threshold indicated by the network device is the keeping threshold for each frequency. When the carrier used by the terminal is at different frequencies, different keeping thresholds can be determined. Based on this, the terminal can determine the keeping threshold corresponding to the frequency based on the frequency where the first carrier is located. Furthermore, when the carrier reselection is triggered based on the first carrier, whether to reselect the first carrier can be determined based on the CBR of the first carrier and the determined keeping threshold corresponding to the frequency where the first carrier is located.

In embodiments of the present disclosure, the terminal receives the configuration information sent by the network device, where the configuration information is used to indicate the keeping threshold for each terminal that performs the carrier selection or carrier reselection. The keeping threshold indicated by the network device is the keeping threshold for each terminal. Different terminals can correspond to different keeping thresholds. Based on this, the terminal can determine its corresponding keeping threshold. Furthermore, when the carrier reselection is triggered based on the first carrier, whether to reselect the first carrier can be determined based on the CBR of the first carrier and the determined keeping threshold corresponding to the terminal.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the terminal determines to reselect the first carrier in response to the CBR of the first carrier being less than or equal to the keeping threshold.

In embodiments of the present disclosure, the terminal determines to reselect the first carrier when the CBR of the first carrier is less than or equal to the keeping threshold.

In some embodiments, the terminal determines not to reselect the first carrier in response to the CBR of the first carrier being greater than or equal to the keeping threshold.

In embodiments of the present disclosure, when the CBR of the first carrier is greater than or equal to the keeping threshold, the terminal determines not to reselect the first carrier.

In some embodiments, the configuration information is used to indicate a keeping threshold for each priority of each cell.

In embodiments of the present disclosure, the terminal receives the configuration information sent by the network device, the configuration information is used to indicate the keeping threshold of each priority of each cell for the carrier selection or carrier reselection.

In some embodiments, the terminal determines, according to the configuration information, a keeping threshold corresponding to a priority of each logical channel where there is data to be transmitted and the carrier selection and/or the carrier reselection is triggered; in response to the CBR of the carrier is less than or equal to the keeping threshold corresponding to the priority of each logical channel where there is data to be transmitted and the carrier selection and/or the carrier reselection is triggered, it is determined to reselect the first carrier.

In some embodiments, the terminal determines, according to the configuration information, a keeping threshold corresponding to a priority of each logical channel where there is data to be transmitted and the carrier selection and/or the carrier reselection is triggered; in response to the CBR of the carrier is greater than or equal to the keeping threshold corresponding to the priority of ant logical channel where there is data to be transmitted and the carrier selection and/or the carrier reselection is triggered, it is determined not to reselect the first carrier.

In embodiments of the present disclosure, the terminal receives the configuration information sent by the network device, the configuration information is used to indicate the keeping threshold of each priority of each cell for the carrier selection or carrier reselection. The keeping threshold indicated by the network device is the keeping threshold for each priority of each cell. The priorities of different logical channels in different cells where the terminal is located correspond to different keeping thresholds.

The terminal can determine the keeping threshold corresponding to the priority of each logical channel where there is data to be transmitted and the carrier selection and/or carrier reselection is triggered based on the configuration information. The terminal can determine the keeping threshold corresponding to the priority of each logical channel where there is data to be transmitted and the carrier selection and/or carrier reselection is triggered in the cell where it is located. Furthermore, when the CBR of the first carrier is determined based on the CBR of the resource pool configured on the activated BWP of the first carrier, the CBR of the first carrier is compared with the determined keeping threshold corresponding to the priority of each logical channel where there is data to be transmitted and the carrier selection and/or carrier reselection is triggered. When the CBR of the first carrier is less than or equal to the determined keeping threshold corresponding to the priority of each logical channel where there is data to be transmitted and the carrier selection and/or carrier reselection is triggered, it is determined to reselect the first carrier.

The terminal determines not to reselect the first carrier when the CBR of the first carrier is greater than or equal to the keeping threshold corresponding to the priority of any logical channel where there is data to be transmitted and the carrier selection and/or carrier reselection is triggered.

In a possible implementation, the terminal determines the keeping threshold corresponding to the priority of each logical channel where there is data to be transmitted and the carrier selection and/or carrier reselection is triggered. When there is one logical channel where there is data to be transmitted and the carrier selection and/or carrier reselection is triggered, one priority can be determined, and a keeping threshold corresponding to the priority can be determined. The terminal can compare the CBR of the first carrier and the determined keeping threshold corresponding to the priority. When the CBR of a carrier is less than or equal to the determined keeping threshold corresponding to the priority, it is determined to reselect the first carrier.

In embodiments of the present disclosure, the terminal determines not to reselect the first carrier when the CBR of the first carrier is greater than or equal to the determined keeping threshold corresponding to the priority.

In another possible implementation, the terminal determines the keeping threshold corresponding to the priority of each logical channel where there is data to be transmitted and the carrier selection and/or the carrier reselection is triggered. When there are multiple logical channels where there is data to be transmitted and the carrier selection and/or the carrier reselection is triggered, multiple priorities can be determined, and the keeping threshold corresponding to each priority can be determined respectively. The terminal can compare the CBR of the first carrier and the determined keeping threshold corresponding to each priority. When the CBR of the first carrier is less than or equal to the determined keeping thresholds corresponding to all priorities, it is determined to reselect the first carrier.

In embodiments of the present disclosure, the terminal determines not to reselect the first carrier when the CBR of the first carrier is greater than or equal to at least one of the determined keeping thresholds corresponding to all priorities.

It can be understood that, when carrier reselection is triggered based on the first carrier and it is determined not to reselect the first carrier, the terminal can evaluate the carriers other than the first carrier among multiple carriers that the terminal supports, and determine the candidate carrier by reselecting the carrier.

In some embodiments, the terminal determines whether a second carrier is a candidate carrier according to a CBR of the second carrier other than the first carrier among the multiple carriers and the reselection threshold.

In embodiments of the present disclosure, when carrier reselection is triggered based on the first carrier and it is determined not to reselect the first carrier, the terminal can evaluate the carriers other than the first carrier among multiple carriers that the terminal supports, and determine the candidate carrier by reselecting the carrier. Whether the second carrier is a candidate carrier may be determined based on the CBR of the second carrier other than the first carrier among the multiple carriers and the reselection threshold.

In some embodiments, in response to determining that the carrier reselection is triggered based on the first carrier, the reselection threshold is configured, and the keeping threshold is not configured, the terminal determines whether the second carrier is the candidate carrier based on the CBR of the second carrier other than the first carrier among the multiple carriers and the reselection threshold.

In embodiments of the present disclosure, when the carrier reselection is triggered based on the first carrier, the reselection threshold is configured, and the keeping threshold is not configured, the terminal can determine not to reselect the first carrier. When the carrier reselection is triggered based on the first carrier and the terminal determines not to reselect the first carrier, the terminal can evaluate the carriers other than the first carrier among the multiple carriers that the terminal supports, and determine the candidate carrier by reselecting the carrier. Whether the second carrier is a candidate carrier may be determined based on the CBR of the second carrier other than the first carrier among the multiple carriers and the reselection threshold.

In embodiments of the present disclosure, the terminal determines the reselection threshold according to the configuration information sent by the network device, the configuration information indicates the reselection threshold for each cell, the reselection threshold for each BWP, the reselection threshold for each frequency, or the reselection threshold for each terminal.

The configuration information indicates reselection conditions under different situations. The method for the terminal to determine whether the second carrier is a candidate carrier based on the CBR of the second carrier other than the first carrier among the multiple carriers and reselection threshold can refer to the above relevant description of the method for determining whether a carrier is a candidate carrier according to the CBR of the carrier and the reselection threshold, which will not be described again in the embodiments of the present disclosure.

In some embodiments, the terminal determines that the second carrier is the candidate carrier in response to the CBR of the second carrier being less than or equal to the reselection threshold.

In embodiments of the present disclosure, the terminal determines whether the second carrier is the candidate carrier based on the CBR of the second carrier other than the first carrier among the multiple carriers and the reselection threshold. In response to the CBR of the second carrier is less than or equal to the reselection threshold, it is determined that the second carrier is the candidate carrier.

In some embodiments, in response to the configuration information indicating a reselection threshold for each priority of each cell, the terminal determines, according to the configuration information, a reselection threshold corresponding to a priority of each logical channel where there is data to be transmitted and the carrier selection and/or the carrier reselection is triggered. In response to the CBR of the second carrier being less than or equal to the reselection threshold corresponding to the priority of each logical channel where there is data to be transmitted and the carrier selection and/or the carrier reselection is triggered, it is determined that the second carrier is the candidate carrier.

In embodiments of the present disclosure, the terminal receives the configuration information sent by the network device. The configuration information indicates the reselection threshold for each priority of each cell for carrier selection or carrier reselection. The terminal determines the reselection threshold corresponding to the priority of each logical channel where there is data to be transmitted and the carrier selection and/or the carrier reselection is triggered based on the configuration information. When the CBR of the second carrier is less than or equal to the reselection threshold corresponding to the priority of each logical channel where there is data to be transmitted and the carrier selection and/or the carrier reselection is triggered, it is determined that the second carrier is the candidate carrier.

The terminal determines the reselection threshold corresponding to the priority of each logical channel where there is data to be transmitted and the carrier selection and/or the carrier reselection is triggered according to the configuration information. When the CBR of the second carrier is less than or equal to the reselection threshold corresponding to the priority of each logical channel where there is data to be transmitted and the carrier selection and/or the carrier reselection is triggered, the relevant description of the method of determining that the second carrier is the candidate carrier can refer to the relevant description of the method for determining that a carrier is the candidate carrier in the above embodiments, in which, the terminal determines, according to the configuration information, the reselection threshold corresponding to the priority of each logical channel where there is data to be transmitted and the carrier selection and/or the carrier reselection is triggered, and determines that the carrier is the candidate carrier when the CBR of the carrier is less than or equal to the reselection threshold corresponding to the priority of each logical channel where there is data to be transmitted and the carrier selection and/or the carrier reselection is triggered. This will not be described again in the embodiments of the present disclosure.

In some embodiments, in a case that there are a plurality of candidate carriers, the terminal selects or reselects M of the plurality of candidate carriers, where M is a positive integer.

In embodiments of the present disclosure, when the terminal determines that there are multiple candidate carriers, it selects or reselects M of the multiple candidate carriers, where M is a positive integer. The terminal can determine how many carriers to select or reselect based on its capability and implementation.

The terminal may order the determined multiple candidate carriers in an ascending order or a descending order according to the corresponding CBRs, and selection or reselection is performed from the lowest one.

For example, when it is determined that there are multiple candidate carriers, one of the multiple carriers is selected.

For example, when it is determined that there are multiple candidate carriers, if there are two carriers that trigger the carrier reselection, two of the multiple carriers are selected.

It should be noted that the above examples are only for illustration and are not intended to be a specific limitation on the embodiments of the present disclosure. The value of M and how to select from multiple candidate carriers can be set as needed.

Referring to FIG. 3, FIG. 3 is a flow chart of a method for determining a CBR provided by an embodiment of the present disclosure.

As shown in FIG. 3, the method is executed by a terminal. The method may include but is not limited to the following steps.

At S31, in response to a condition for triggering carrier selection or carrier reselection being met, a CBR measurement is performed on a resource pool configured on an activated BWP, and a CBR corresponding to each resource pool is determined, in which an activated BWP of a carrier is configured with at least one resource pool.

At S32, according to the at least one CBR corresponding to the at least one resource pool, at least one of an average value of all CBRs, a maximum value of the all CBRs, a minimum value of the all CBRs, any one of the all CBRs, an average value of N CBRs among the all CBRs, a maximum value of N CBRs among the all CBRs, a minimum value of N CBRs among the all CBRs, a CBR corresponding to a default resource pool is determined as the CBR of the carrier.

In embodiments of the present disclosure, in the case that the terminal performs the CBR measurement on the resource pool configured on the activated BWP to obtain the CBR corresponding to each resource pool, a CBR of the carrier can be determined based on the CBR corresponding to the resource pool, and the average value of the CBRs corresponding to all resource pools can be determined as the CBR of the carrier.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool, and the maximum value among the CBRs corresponding to all resource pools can be determined as the CBR of the carrier.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool, and the minimum value among the CBRs corresponding to all resource pools can be determined as the CBR of the carrier.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool, and one CBR is randomly selected from the CBRs corresponding to all resource pools as the CBR of the carrier.

It should be noted that the terminal can randomly select one of the CBRs corresponding to all resource pools based on implementation and determine it as the CBR of the carrier, or it can also randomly select one of the CBRs corresponding to all resource pools based on an instruction from a network device and determine it as the CBR of the carrier. Embodiments of the present disclosure do not specifically limit this.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool. N CBRs are randomly selected from the CBRs corresponding to all the resource pools, and an average value of the N CBRs is determined as the CBR of the carrier, where N is a positive integer.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool. N CBRs are randomly selected from the CBRs corresponding to all the resource pools, and a maximum value among the N CBRs is determined as the CBR of the carrier, where N is a positive integer.

In embodiments of the present disclosure, in the case that the terminal performs the CBR measurement on the resource pool configured on the activated BWP to obtain the CBR corresponding to each resource pool, the CBR of the carrier can be determined based on the CBR corresponding to the resource pool. N CBRs are randomly selected from the CBRs corresponding to all the resource pools, and a minimum value among the N CBRs is determined as the CBR of the carrier, where N is a positive integer.

It should be noted that the terminal may determine the number N for selecting the CBRs corresponding to the resource pools based on implementation, or according to an instruction from the network device, or based on a pre-configuration. The number N for selecting the CBRs corresponding to the resource pool is not specifically limited in embodiments of the disclosure.

In some embodiments, randomly selecting the N CBRs from the CBRs corresponding to all resource pools by the terminal includes: receiving first indication information sent by a network device, in which the first indication information is configured to indicate the N which is a number of CBRs randomly selected from the CBRs corresponding to all the resource pools; and determining, according to the first indication information, to randomly select the N CBRs from the CBRs corresponding to all the resource pools.

In embodiments of the present disclosure, the terminal randomly selects the N CBRs corresponding to all resource pools, and can determine the number N based on the instruction from the network device. For example, the terminal receives the first indication information sent by the network device. The first indication information is used to indicate the number N of CBRs randomly selected from the CBRs corresponding to all resource pools. According to the first indication information, it is determined to randomly select the N CBRs from the CBRs corresponding to the resource pools.

For example, N is 2, and the terminal receives the first indication information sent by the network device. The first indication information is used to indicate that the number of CBRs randomly selected from the CBRs corresponding to all resource pools is 2. According to the first indication information, it is determined to randomly select 2 CBRs from the CBRs corresponding to the resource pools.

In embodiments of the present disclosure, the terminal performs the CBR measurement on the resource pools configured on the activated BWP to obtain the CBR measurement result. The CBR of the carrier can be determined according to the CBRs corresponding to the resource pools. A default resource pool can be determined from the resource pools, and a CBR corresponding to the default resource pool can be determined as the CBR of the carrier.

It should be noted that the terminal may determine the default resource pool based on implementation, or may determine the default resource pool based on an instruction from the network device. Embodiments of the present disclosure do not specifically limit this.

It should be noted that in embodiments of the present disclosure, S31 and S32 can be implemented alone, or can be implemented in combination with any other step in the embodiments of the present disclosure, for example, in combination with S21 and S22 in the embodiments of the present disclosure, which is not limited in embodiments of the present disclosure.

By implementing the embodiments of the present disclosure, the terminal performs the CBR measurement on the resource pool configured on the activated BWP in response to the condition for triggering the carrier selection or carrier reselection being met, and determines the CBR corresponding to each resource pool, in which at least one resource pool carrier is configured to one activated BWP of the carrier; according to the CBR corresponding to the resource pool, at least one of an average value of all CBRs, a maximum value of the all CBRs, a minimum value of the all CBRs, any one of the all CBRs, an average value of N CBRs among the all CBRs, a maximum value of N CBRs among the all CBRs, a minimum value of N CBRs among the all CBRs, a CBR corresponding to a default resource pool is determined as the CBR of the carrier. Therefore, the terminal can determine the CBR of the carrier during the process of carrier selection and/or carrier reselection.

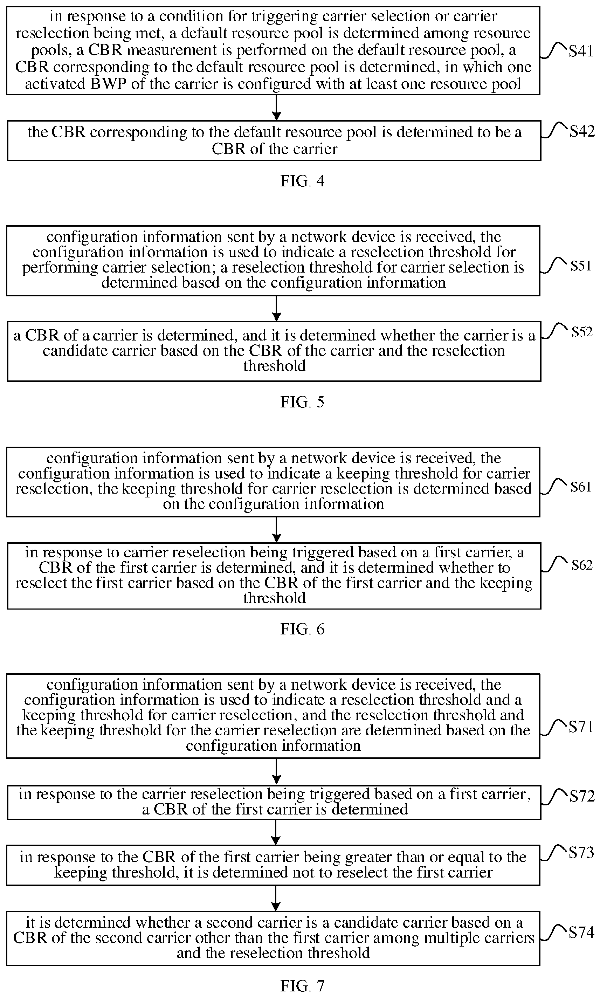

Referring to FIG. 4, FIG. 4 is a flow chart of a method for determining a CBR provided by an embodiment of the present disclosure.

As shown in FIG. 4, the method is executed by the terminal. The method may include but is not limited to the following steps.

At S41, in response to a condition for triggering carrier selection or carrier reselection being met, a default resource pool is determined among resource pools, a CBR measurement is performed on the default resource pool, a CBR corresponding to the default resource pool is determined, in which one activated BWP of the carrier is configured with at least one resource pool.

At S42, the CBR corresponding to the default resource pool is determined to be a CBR of the carrier.

In embodiments of the present disclosure, the terminal may determine the default resource pool based on implementation, or may also determine the default resource pool based on an instruction from the network device. Embodiments of the present disclosure do not specifically limit this.

In some embodiments, the terminal determines the default resource pool among the resource pools, including: receiving second indication information sent by the network device, in which the second indication information is used to indicate the default resource pool; and determining the default resource pool according to the second indication information.

In this embodiment of the present disclosure, the terminal determines the default resource pool in the resource pools, and can determine the default resource pool based on the instruction of the network device. For example, the terminal receives the second indication information sent by the network device, and the second indication information is used to indicate the default resource pool, and the terminal can determine the default resource pool according to the second indication information.

In some possible implementations, when one BWP is activated for the carrier and one BWP is configured with multiple resource pools, the second indication information sent by the network device may indicate one of the multiple resource pools configured on the BWP as the default resource pool.

For example, the second indication information may indicate an identifier of one of the multiple resource pools configured on the BWP, such as a resource pool index, which is used to indicate the default resource pool in the multiple resource pools configured on the BWP to the terminal.

For example, the second indication information may also indicate whether a resource pool is the default resource pool. For example, whether a resource pool is the default resource pool may be indicated in a resource pool configuration, for example, by adding or reusing a relevant indicator parameter. When the parameter is a first specific value, it indicates that the resource pool is the default resource pool. When the parameter is not the first specific value but it is the second specific value, it indicates that the resource pool is not the default resource pool. For example, when the indicator parameter is set to 1, it indicates that the resource pool is the default resource pool; when the indicator parameter is not 1 but it is 0, it indicates that the resource pool is not the default resource pool. For example, when the indicator parameter is set to enabled, it indicates that the resource pool is the default resource pool; when the indicator parameter is set to disable, it indicates that the resource pool is not the default resource pool.

In embodiments of the present disclosure, after determining the default resource pool in the resource pools, the terminal can perform the CBR measurement on the default resource pool, determine the CBR corresponding to the default resource pool, and determine the CBR corresponding to the default resource pool as the CBR of the carrier.

It should be noted that in the embodiments of the present disclosure, S41 and S42 can be implemented alone, or can be implemented in combination with any other step in the embodiments of the present disclosure, for example, in combination with S21 and S22 in the embodiments of the present disclosure, which is not limited in embodiments of the present disclosure.

By implementing the embodiments of the present disclosure, the terminal determines the default resource pool in the resource pools in response to the condition for triggering the carrier selection or carrier reselection being met, performs the CBR measurement on the default resource pool, and determines the CBR corresponding to the default resource pool, in which, one activated BWP of the carrier is configured with at least one resource pool. The terminal determines the CBR corresponding to the default resource pool as the CBR of the carrier. Therefore, the terminal can determine the CBR of the carrier during the process of carrier selection and/or carrier reselection.

Referring to FIG. 5, FIG. 5 is a flow chart of carrier selection method provided by an embodiment of the present disclosure.

As shown in FIG. 5, the method is executed by the terminal. The method may include but is not limited to the following steps.

At S51, configuration information sent by a network device is received, the configuration information is used to indicate a reselection threshold for performing carrier selection; a reselection threshold for carrier selection is determined based on the configuration information.

S52, a CBR of a carrier is determined, and it is determined whether the carrier is a candidate carrier based on the CBR of the carrier and the reselection threshold.

In embodiments of the present disclosure, the method for the terminal to determine the CBR of the carrier may referring to the relevant description of the method for the terminal to determine the CBR of the carrier in the above embodiments, which will not be described again here.

In embodiments of the present disclosure, the terminal receives the configuration information sent by the network device, and the configuration information is used to indicate the reselection threshold for the carrier selection in LTE V2X or NRV2X or V2X of other communication systems. The terminal can determine the reselection threshold for the carrier selection based on the configuration information of the network device.

In embodiments of the present disclosure, when the condition for triggering the carrier selection is met, the terminal can perform a CBR measurement on the resource pool configured on the activated BWP of the carrier to obtain a CBR measurement result, and determine the CBR corresponding to the resource pool, in which, one activated BWP of the carrier is configured with at least one resource pool. The CBR of the carrier is determined according to the CBR corresponding to the resource pool. Furthermore, based on the CBR of the carrier and the reselection threshold, it is determined whether the carrier is a candidate carrier.

In some embodiments, the configuration information is used to indicate at least one of the following:
a reselection threshold for each cell;
a reselection threshold for each BWP;
a reselection threshold for each frequency; or
a reselection threshold for each terminal.

In embodiments of the present disclosure, the terminal receives the configuration information sent by the network device, the configuration information is used to indicate the reselection threshold for each cell for the carrier selection. The reselection threshold indicated by the network device is the reselection threshold for each cell. The terminal can determine different reselection thresholds in different cells. Based on this, the terminal can determine the reselection threshold of a cell where the terminal is located. According to the CBR and the determined reselection threshold of the cell, the terminal determines whether the carrier is the candidate carrier.

In embodiments of the present disclosure, the terminal receives the configuration information sent by the network device, the configuration information is used to indicate the reselection threshold for each BWP for the carrier selection. The reselection threshold indicated by the network device is the reselection threshold for each BWP. When different BWPs are activated for the carrier used by the terminal, different reselection thresholds can be determined. Based on this, the terminal can determine the reselection threshold corresponding to the BWP based on the activated BWP of the carrier. Furthermore, when the CBR of the carrier is determined based on the CBR of the resource pool configured on the activated BWP of the carrier, it is determined whether the carrier is the candidate carrier based on the CBR of the carrier and the determined reselection threshold corresponding to the activated BWP of the carrier.

In embodiments of the present disclosure, the terminal receives the configuration information sent by the network device, the configuration information is used to indicate the reselection threshold for each frequency for the carrier selection. The reselection threshold indicated by the network device is the reselection threshold for each frequency. When the carrier used by the terminal is located at different frequencies, different reselection thresholds can be determined. Based on this, according to a frequency of the carrier, the terminal can determine the reselection threshold corresponding to the frequency. When the CBR of the carrier is determined based on the CBR of the resource pool configured on the activated BWP of the carrier, it is determined whether the carrier is the candidate carrier based on the CBR of the carrier and the determined reselection threshold corresponding to the frequency of the carrier.

In embodiments of the present disclosure, the terminal receives the configuration information sent by the network device, the configuration information is used to indicate the reselection threshold for each terminal that performs the carrier selection. The reselection threshold indicated by the network device is the reselection threshold for each terminal. Different terminals can correspond to different reselection thresholds. Based on this, the terminal can determine its corresponding reselection threshold. When the CBR of the carrier is determined according to the CBR of the resource pool configured on the activated BWP of the carrier, whether the carrier is a candidate carrier is determined based on the CBR of the carrier and the determined reselection threshold corresponding to the terminal.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the terminal determines that the carrier is the candidate carrier in response to the CBR of the carrier being less than or equal to the reselection threshold.

In embodiments of the present disclosure, the terminal determines that the carrier is the candidate carrier when the CBR of the carrier is less than or equal to the reselection threshold.

In some embodiments, the terminal may determine that the carrier is not the candidate carrier when the CBR of the carrier is greater than or equal to the reselection threshold.

In some embodiments, the configuration information is used to indicate a reselection threshold for each priority of each cell.

In embodiments of the present disclosure, the terminal receives the configuration information sent by the network device, the configuration information is used to indicate the reselection threshold for each priority of each cell for the carrier selection.

In some embodiments, the terminal determines, according to the configuration information, a reselection threshold corresponding to a priority of each logical channel where there is data to be transmitted and the carrier selection and/or carrier reselection is triggered; in response to the CBR of the carrier is less than or equal to the reselection threshold corresponding to the priority of each logical channel where there is data to be transmitted and the carrier selection and/or carrier reselection is triggered, it is determined that the carrier is the candidate carrier.

In embodiments of the present disclosure, the terminal receives the configuration information sent by the network device, the configuration information is used to indicate the reselection threshold for each priority of each cell for performing the carrier selection. The reselection threshold indicated by the network device is the reselection threshold for each priority of each cell. Priorities of different logical channels in different cells where the terminal is located can correspond to different reselection thresholds.

The terminal can determine the reselection threshold corresponding to the priority of each logical channel where there is data to be transmitted and the carrier selection and/or the carrier reselection is triggered based on the configuration information. The terminal can determine the cell where it is located and the reselection threshold corresponding to the priority of each logical channel where there is data to be transmitted and the carrier selection and/or the carrier reselection is triggered. When the CBR of the carrier is determined based on the CBR of the resource pool configured on the activated BWP of the carrier, the CBR of the carrier is compared with the determined reselection threshold corresponding to the priority of each logical channel where there is data to be transmitted and the carrier selection and/or the carrier reselection is triggered. When the CBR of the carrier is less than or equal to the determined reselection threshold corresponding to the priority of each logical channel where there is data to be transmitted and the carrier selection and/or the carrier reselection is triggered, it is determined that the carrier is the candidate carrier.

In a possible implementation, the terminal determines the reselection threshold corresponding to the priority of each logical channel where there is data to be transmitted and the carrier selection and/or carrier reselection is triggered. In the case that there is one logical channel where there is data to be transmitted and the carrier selection and/or carrier reselection is triggered, a priority can be determined and a reselection threshold corresponding to the priority can be determined. The terminal can compare the CBR of the carrier and the determined reselection threshold corresponding to the priority. If the CBR of the carrier is less than or equal to the determined reselection threshold corresponding to the priority, it is determined that the carrier is the candidate carrier.

In another possible implementation, the terminal determines the reselection threshold corresponding to the priority of each logical channel where there is data to be transmitted and the carrier selection and/or carrier reselection is triggered. In the case that there are multiple logical channels where there is data to be transmitted and the carrier selection and/or carrier reselection is triggered, multiple priorities can be determined, and a reselection threshold corresponding to each priority can be determined respectively. The terminal can compare the CBR of the carrier and the determined reselection threshold corresponding to each priority. When the CBR of the carrier is less than or equal to the all the reselection thresholds corresponding to the determined priorities, it is determined that the carrier is the candidate carrier.

In some embodiments, in response to there being a plurality of candidate carriers, the terminal selects or reselects M of the plurality of candidate carriers, where M is a positive integer.

In embodiments of the present disclosure, when the terminal determines that there are multiple candidate carriers, it selects or reselects M of the multiple candidate carriers, where M is a positive integer. The terminal can determine how many carriers to select or reselect based on its capability and implementation.

The terminal may order the determined multiple candidate carriers in an ascending order or a descending order according to the corresponding CBRs, and selection or reselection is performed from the lowest one.

For example, when it is determined that there are multiple candidate carriers, one of the multiple carriers is selected.

For example, when it is determined that there are multiple candidate carriers, if there are two carriers that trigger the carrier reselection, two of the multiple carriers are selected.

It should be noted that the above examples are only for illustration and are not intended to be a specific limitation on the embodiments of the present disclosure. The value of M and how to select from multiple candidate carriers can be set as needed.

It should be noted that in embodiments of the present disclosure, S51 and S52 can be implemented alone or in combination with any other steps in the embodiments of the present disclosure, for example, implemented in combination with S21 and S22 and/or S31 and S32 and/or S41 and S42 in the embodiments of the present disclosure, and embodiments of the present disclosure do not limit this.

By implementing the embodiments of the present disclosure, the terminal receives the configuration information sent by the network device, the configuration information is used to indicate the reselection threshold for the carrier selection; the reselection threshold for performing the carrier selection is determined based on the configuration information; the CBR of the carrier is determined, it is determined whether the carrier is the candidate carrier based on the CBR of the carrier and reselection threshold. Thus, the terminal can determine the CBR of the carrier during the process of carrier selection and/or carrier reselection, and perform the carrier selection based on the reselection threshold configured by the network device, to ensure communication quality.

Referring to FIG. 6, FIG. 6 is a flow chart of a carrier selection method provided by an embodiment of the present disclosure.

As shown in FIG. 6, the method is executed by the terminal. The method may include but is not limited to the following steps.

At S61, configuration information sent by a network device is received, the configuration information is used to indicate a keeping threshold for carrier reselection, the keeping threshold for carrier reselection is determined based on the configuration information.

At S62, in response to carrier reselection being triggered based on a first carrier, a CBR of the first carrier is determined, and it is determined whether to reselect the first carrier based on the CBR of the first carrier and the keeping threshold.

In embodiments of the present disclosure, the terminal receives the configuration information sent by the network device, and the configuration information is used to indicate the keeping threshold for the carrier reselection in LTE V2X or NR V2X or V2X of other communication systems. The terminal can determine the keeping threshold for the carrier reselection based on the configuration information of the network device.

In embodiments of the present disclosure, when the first carrier triggers the carrier reselection, the terminal can determine the CBR of the first carrier, and determine whether to reselect the first carrier based on the CBR of the first carrier and the keeping threshold.

For the method for the terminal to determine the CBR of the first carrier, Referring to the relevant description of the method for the terminal to determine the CBR of the carrier in the above embodiments, which will not be described again here.

In some embodiments, the configuration information is used to indicate at least one of the following:
a keeping threshold for each cell;
a keeping threshold for each BWP;
a keeping threshold for each frequency; or
a keeping threshold for each terminal.

In embodiments of the present disclosure, the terminal receives the configuration information sent by the network device, the configuration information is used to indicate the keeping threshold for each cell for the carrier reselection. The keeping threshold indicated by the network device is the keeping threshold for each cell. The terminal can determine different keeping thresholds in different cells. Based on this, the terminal can determine the keeping threshold of a cell where the terminal is located. According to the CBR and the determined keeping threshold of the cell, the terminal determines whether the carrier is the candidate carrier.

In embodiments of the present disclosure, the terminal receives the configuration information sent by the network device, the configuration information is used to indicate the keeping threshold for each BWP for the carrier reselection. The keeping threshold indicated by the network device is the keeping threshold for each BWP. When different BWPs are activated for the carrier used by the terminal, different keeping thresholds can be determined. Based on this, the terminal can determine the keeping threshold corresponding to the BWP based on the activated BWP of the carrier. When the carrier reselection is triggered based on the first carrier, whether to reselect the first carrier can be determined based on the CBR of the first carrier and the determined keeping threshold corresponding to the activated BWP of the first carrier.

In embodiments of the present disclosure, the terminal receives the configuration information sent by the network device, the configuration information is used to indicate the keeping threshold for each frequency for carrier reselection. The keeping threshold indicated by the network device is the keeping threshold for each frequency. When the carrier used by the terminal is at different frequencies, different keeping thresholds can be determined. Based on this, the terminal can determine the keeping threshold corresponding to the frequency based on the frequency where the first carrier is located. Furthermore, when the carrier reselection is triggered based on the first carrier, whether to reselect the first carrier can be determined based on the CBR of the first carrier and the determined keeping threshold corresponding to the frequency where the first carrier is located.

In embodiments of the present disclosure, the terminal receives the configuration information sent by the network device, the configuration information is used to indicate the keeping threshold for each terminal that performs the carrier reselection. The keeping threshold indicated by the network device is the keeping threshold for each terminal. Different terminals can correspond to different keeping thresholds. Based on this, the terminal can determine its corresponding keeping threshold. Further, when the carrier reselection is triggered based on the first carrier, whether to reselect the first carrier can be determined based on the CBR of the first carrier and the determined keeping threshold corresponding to the terminal.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the terminal determines to reselect the first carrier in response to the CBR of the first carrier being less than or equal to the keeping threshold.

In embodiments of the present disclosure, the terminal determines to reselect the first carrier when the CBR of the first carrier is less than or equal to the keeping threshold.

In some embodiments, the terminal determines not to reselect the first carrier in response to the CBR of the first carrier being greater than or equal to the keeping threshold.

In embodiments of the present disclosure, when the CBR of the first carrier is greater than or equal to the keeping threshold, the terminal determines not to reselect the first carrier.

In some embodiments, the configuration information is used to indicate a keeping threshold for each priority of each cell.

In embodiments of the present disclosure, the terminal receives the configuration information sent by the network device, the configuration information is used to indicate the keeping threshold for each priority of each cell for the carrier reselection.

In some embodiments, the terminal determines, according to the configuration information, a keeping threshold corresponding to a priority of each logical channel where there is data to be transmitted and the carrier selection and/or carrier reselection is triggered; in response to the CBR of the carrier is less than or equal to each the keeping threshold corresponding to the priority of each logical channel where there is data to be transmitted and the carrier selection and/or carrier reselection is triggered, it is determined to reselect the first carrier.

In some embodiments, the terminal determines, according to the configuration information, a keeping threshold corresponding to a priority of each logical channel where there is data to be transmitted and the carrier selection and/or carrier reselection is triggered; in response to the CBR of the carrier is greater than or equal to the keeping threshold corresponding to the priority of any of logical channels where there is data to be transmitted and the carrier selection and/or carrier reselection is triggered, it is determined not to reselect the first carrier

In embodiments of the present disclosure, the terminal receives the configuration information sent by the network device, the configuration information is used to indicate the keeping threshold for each priority of each cell for carrier reselection. The keeping threshold indicated by the network device is the keeping threshold for each priority of each cell. Different priorities of different logical channels in different cells where the terminal is located can correspond to different keeping thresholds.

The terminal can determine the keeping threshold corresponding to the priority of each logical channel where there is data to be transmitted and the carrier selection and/or carrier reselection is triggered based on the configuration information. The terminal can determine the cell where it is located and the keeping threshold corresponding to the priority of each logical channel where there is data to be transmitted and the carrier selection and/or carrier reselection is triggered. In this way, when the CBR of the first carrier is determined based on the CBR of the resource pool configured on the activated BWP of the first carrier, the CBR of the first carrier is compared with the keeping threshold corresponding to the priority of each logical channel where there is data to be transmitted and the carrier selection and/or carrier reselection is triggered. When the CBR of the first carrier is less than or equal to the determined keeping threshold corresponding to the priority of each logical channel where there is data to be transmitted and the carrier selection and/or carrier reselection is triggered, it is determined to reselect the first carrier.

The terminal determines not to reselect the first carrier when the CBR of the first carrier is greater than or equal to the determined keeping threshold corresponding to the priority of each logical channel where there is data to be transmitted and the carrier selection and/or carrier reselection is triggered.

In a possible implementation, the terminal determines the keeping threshold corresponding to the priority of each logical channel where there is data to be transmitted and the carrier selection and/or carrier reselection is triggered. When there is one logical channel where there is data to be transmitted and the carrier selection and/or carrier reselection is triggered, a priority can be determined and the keeping threshold corresponding to the priority can be determined. The terminal can compare the CBR of the first carrier and the determined keeping threshold corresponding to the priority. When the CBR of the first carrier is less than or equal to the determined keeping threshold corresponding to the priority, it is determined to reselect the first carrier.

In embodiments of the present disclosure, the terminal determines not to reselect the first carrier when the CBR of the first carrier is greater than or equal to the determined keeping threshold corresponding to the priority.

In another possible implementation, the terminal determines the keeping threshold corresponding to the priority of each logical channel where there is data to be transmitted and the carrier selection and/or carrier reselection is triggered. When there are multiple logical channels where there is data to be transmitted and the carrier selection and/or carrier reselection is triggered, multiple priorities can be determined, and the keeping threshold corresponding to each priority can be determined respectively. The terminal can compare the CBR of the first carrier and the determined keeping threshold corresponding to each priority. When the CBR of the first carrier is less than or equal to the determined keeping threshold corresponding to all priorities, it is determined to reselect the first carrier.

In embodiments of the present disclosure, the terminal determines not to reselect the first carrier when the CBR of the first carrier is greater than or equal to at least one of the determined keeping thresholds corresponding to all priorities.

It should be noted that in the embodiments of the present disclosure, S61 and S62 can be implemented alone or in combination with any other steps in the embodiments of the present disclosure, for example, implemented in combination with S21 and S22 and/or S31 and S32 and/or S41 and S42 and/or S51 and S52 in the embodiments of the present disclosure, and embodiments of the present disclosure do not limit this.

By implementing the embodiments of the present disclosure, the terminal receives the configuration information sent by the network device, the configuration information is used to indicate the keeping threshold for the carrier reselection; the keeping threshold for the carrier reselection is determined based on the configuration information; in response to the carrier reselection being triggered based on the first carrier, the CBR of the first carrier is determined, and it is determined whether to reselect the first carrier based on the CBR of the first carrier and the keeping threshold. Therefore, the terminal can determine the CBR of the carrier during the process of carrier selection and/or carrier reselection, and perform the carrier reselection based on the keeping threshold configured by the network device, to ensure communication quality.

Referring to FIG. 7, FIG. 7 is a flow chart of a carrier selection method provided by an embodiment of the present disclosure.

As shown in FIG. 7, the method is executed by the terminal. The method may include but is not limited to the following steps.

At S71, configuration information sent by a network device is received, the configuration information is used to indicate a reselection threshold and a keeping threshold for carrier reselection, and the reselection threshold and the keeping threshold for the carrier reselection are determined based on the configuration information.

At S72, in response to the carrier reselection being triggered based on a first carrier, a CBR of the first carrier is determined.

The method for the terminal to determine the CBR of the first carrier may refer to the method for the terminal to determine the CBR of the carrier in the above embodiments, which will not be described again here.

At S73, in response to the CBR of the first carrier being greater than or equal to the keeping threshold, it is determined not to reselect the first carrier.

Relevant descriptions of S71 to S73 may refer to the relevant descriptions in the above embodiments and will not be described again here.

S74, it is determined whether a second carrier is a candidate carrier based on a CBR of the second carrier other than the first carrier among multiple carriers and the reselection threshold.

It can be understood that, when the carrier reselection is triggered based on the first carrier, and it is determined not to reselect the first carrier, the terminal can evaluate the carriers other than the first carrier among the multiple carriers supported by the terminal, reselect a carrier, and determine a candidate carrier.

In embodiments of the present disclosure, when the carrier reselection is triggered based on the first carrier, and it is determined not to reselect the first carrier, the terminal can evaluate the carriers other than the first carrier among the multiple carriers supported by the terminal, reselect a carrier, and determine a candidate carrier. Whether the second carrier is a candidate carrier may be determined based on the CBR of the second carrier other than the first carrier among the multiple carriers and reselection threshold.

In some embodiments, the terminal determines that the second carrier is the candidate carrier in response to the CBR of the second carrier being less than or equal to the reselection threshold.

In embodiments of the present disclosure, the terminal determines whether the second carrier is the candidate carrier based on the CBR of the second carrier other than the first carrier among the multiple carriers and reselection threshold, and if the CBR of the second carrier is less than or equal to the reselection threshold, it is determined that the second carrier is the candidate carrier.

In some embodiments, in response to the configuration information indicating a reselection threshold for each priority of each cell, the terminal determines, according to the configuration information, a reselection threshold corresponding to a priority of each logical channel where there is data to be transmitted and the carrier selection and/or the carrier reselection is triggered. In response to the CBR of the second carrier being less than or equal to the reselection threshold corresponding to the priority of each logical channel where there is data to be transmitted and the carrier selection and/or the carrier reselection is triggered, it is determined that the second carrier is the candidate carrier.

In embodiments of the present disclosure, the terminal receives the configuration information sent by the network device. The configuration information indicates the reselection threshold for each priority of each cell for the carrier selection or carrier reselection. The terminal determines the reselection threshold corresponding to the priority of each logical channel where there is data to be transmitted and the carrier selection and/or the carrier reselection is triggered based on the configuration information. When the CBR of the second carrier is less than or equal to the reselection threshold corresponding to the priority of each logical channel where there is data to be transmitted and the carrier selection and/or the carrier reselection is triggered, it is determined that the second carrier is the candidate carrier.

The terminal determines the reselection threshold corresponding to the priority of each logical channel where there is data to be transmitted and the carrier selection and/or the carrier reselection is triggered according to the configuration information. When the CBR of the second carrier is less than or equal to the reselection threshold corresponding to the priority of each logical channel where there is data to be transmitted and the carrier selection and/or the carrier reselection is triggered, the relevant description of the method of determining that the second carrier is the candidate carrier can refer to the relevant description of the method for determining that a carrier is the candidate carrier in the above embodiments, in which, the terminal determines, according to the configuration information, the reselection threshold corresponding to the priority of each logical channel where there is data to be transmitted and the carrier selection and/or the carrier reselection is triggered, and determines that the carrier is the candidate carrier when the CBR of the carrier is less than or equal to the reselection threshold corresponding to the priority of each logical channel where there is data to be transmitted and the carrier selection and/or the carrier reselection is triggered. This will not be described again in the embodiments of the present disclosure.

In some embodiments, in a case that there are a plurality of candidate carriers, the terminal selects or reselects M of the plurality of candidate carriers, where M is a positive integer.

In embodiments of the present disclosure, when the terminal determines that there are multiple candidate carriers, it selects or reselects M of the multiple candidate carriers, where M is a positive integer. The terminal can determine how many carriers to select or reselect based on its capability and implementation.

The terminal may order the determined multiple candidate carriers in an ascending order or a descending order according to the corresponding CBRs, and selection or reselection is performed from the lowest one.

For example, when it is determined that there are multiple candidate carriers, one of the multiple carriers is selected.

For example, when it is determined that there are multiple candidate carriers, if there are two carriers that trigger the carrier reselection, two of the multiple carriers are selected.

It should be noted that the above examples are only for illustration and are not intended to be a specific limitation on the embodiments of the present disclosure. The value of M and how to select from multiple candidate carriers can be set as needed.

It should be noted that in the embodiments of the present disclosure, S71 to S74 can be implemented alone or in combination with any other steps in the embodiments of the present disclosure, for example, in combination with S21 and S22 and/or S31 and S32 and/or S41 and S42 and/or S51 and S52 and/or S61 and S62 in the embodiments of the present disclosure, and embodiments of the present disclosure do not limit this.

By implementing the embodiments of the present disclosure, the terminal receives the configuration information sent by the network device, the configuration information is used to indicate the reselection threshold and the keeping threshold for the carrier reselection, and the reselection threshold and the keeping threshold for the carrier reselection are determined based on the configuration information; in response to the carrier reselection is triggered based on the first carrier, the CBR of the first carrier is determined; in response to the CBR of the first carrier being greater than or equal to the keeping threshold, it is determined not to reselect the first carrier; it is determined whether the second carrier is the candidate carrier according to the CBR of the second carrier other than the first carrier among the multiple carriers and the reselection threshold. Thus, the terminal can determine the CBR of the carrier during the process of carrier selection and/or carrier reselection, and perform the carrier reselection based on the reselection threshold and the keeping threshold configured by the network device, to ensure communication quality.

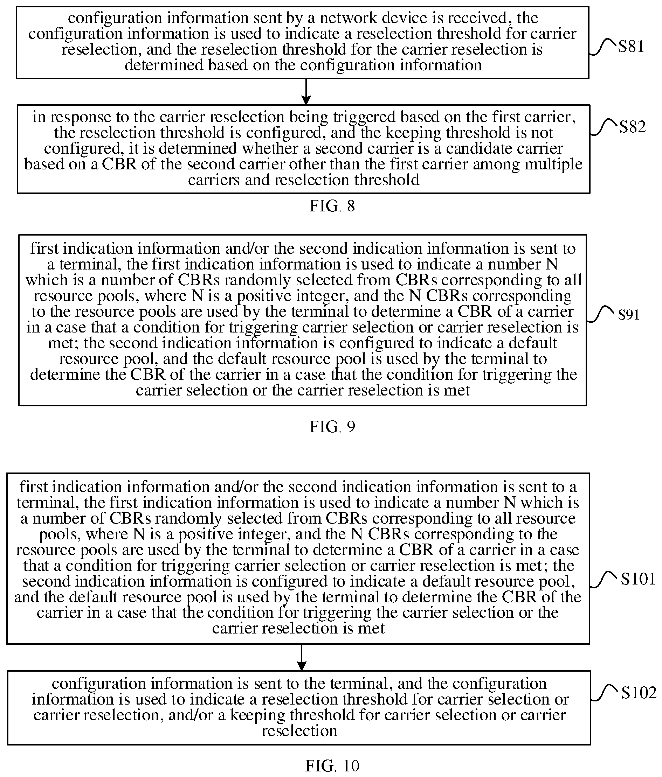

Referring to FIG. 8, FIG. 8 is a flow chart of a carrier selection method provided by an embodiment of the present disclosure.

As shown in FIG. 8, the method is executed by the terminal. The method may include but is not limited to the following steps.

At S81, configuration information sent by a network device is received, the configuration information is used to indicate a reselection threshold for carrier reselection, and the reselection threshold for the carrier reselection is determined based on the configuration information.

Relevant description of S81 may refer to the relevant description in the above embodiments, and will not be described again here.

At S82, in response to the carrier reselection being triggered based on the first carrier, the reselection threshold is configured, and the keeping threshold is not configured, it is determined whether a second carrier is a candidate carrier based on a CBR of the second carrier other than the first carrier among multiple carriers and reselection threshold.

It can be understood that when the carrier reselection is triggered based on the first carrier and the network device does not configure the keeping threshold for the carrier reselection, the terminal can determine not to reselect the first carrier. Based on this, the terminal can evaluate carriers other than the first carrier among multiple carriers supported by the terminal, carrier selection is performed again, and a candidate carrier is determined.

In embodiments of the present disclosure, when the carrier reselection is triggered based on the first carrier, and it is determined not to reselect the first carrier, the terminal can evaluate the carriers other than the first carrier among the multiple carriers supported by the terminal, reselect a carrier, and determine a candidate carrier. Whether the second carrier is a candidate carrier may be determined based on the CBR of the second carrier other than the first carrier among the multiple carriers and reselection threshold.

In some embodiments, the terminal determines that the second carrier is the candidate carrier in response to the CBR of the second carrier being less than or equal to the reselection threshold.

In embodiments of the present disclosure, the terminal determines whether the second carrier is the candidate carrier based on the CBR of the second carrier other than the first carrier among the multiple carriers and reselection threshold, and if the CBR of the second carrier is less than or equal to the reselection threshold, it is determined that the second carrier is the candidate carrier.

In some embodiments, in response to the configuration information indicating a reselection threshold for each priority of each cell, the terminal determines, according to the configuration information, a reselection threshold corresponding to a priority of each logical channel where there is data to be transmitted and the carrier selection and/or the carrier reselection is triggered. In response to the CBR of the second carrier being less than or equal to the reselection threshold corresponding to the priority of each logical channel where there is data to be transmitted and the carrier selection and/or the carrier reselection is triggered, it is determined that the second carrier is the candidate carrier.

In embodiments of the present disclosure, the terminal receives the configuration information sent by the network device. The configuration information indicates the reselection threshold for each priority of each cell for the carrier selection or carrier reselection. The terminal determines the reselection threshold corresponding to the priority of each logical channel where there is data to be transmitted and the carrier selection and/or the carrier reselection is triggered based on the configuration information. When the CBR of the second carrier is less than or equal to the reselection threshold corresponding to the priority of each logical channel where there is data to be transmitted and the carrier selection and/or the carrier reselection is triggered, it is determined that the second carrier is the candidate carrier.

The terminal determines the reselection threshold corresponding to the priority of each logical channel where there is data to be transmitted and the carrier selection and/or the carrier reselection is triggered according to the configuration information. When the CBR of the second carrier is less than or equal to the reselection threshold corresponding to the priority of each logical channel where there is data to be transmitted and the carrier selection and/or the carrier reselection is triggered, the relevant description of the method of determining that the second carrier is the candidate carrier can refer to the relevant description of the method for determining that a carrier is the candidate carrier in the above embodiments, in which, the terminal determines, according to the configuration information, the reselection threshold corresponding to the priority of each logical channel where there is data to be transmitted and the carrier selection and/or the carrier reselection is triggered, and determines that the carrier is the candidate carrier when the CBR of the carrier is less than or equal to the reselection threshold corresponding to the priority of each logical channel where there is data to be transmitted and the carrier selection and/or the carrier reselection is triggered. This will not be described again in the embodiments of the present disclosure.

In some embodiments, in a case that there are a plurality of candidate carriers, the terminal selects or reselects M of the plurality of candidate carriers, where M is a positive integer.

In embodiments of the present disclosure, when the terminal determines that there are multiple candidate carriers, it selects or reselects M of the multiple candidate carriers, where M is a positive integer. The terminal can determine how many carriers to select or reselect based on its capability and implementation.

The terminal may order the determined multiple candidate carriers in an ascending order or a descending order according to the corresponding CBRs, and selection or reselection is performed from the lowest one.

For example, when it is determined that there are multiple candidate carriers, one of the multiple carriers is selected.

For example, when it is determined that there are multiple candidate carriers, if there are two carriers that trigger the carrier reselection, two of the multiple carriers are selected.

It should be noted that the above examples are only for illustration and are not intended to be a specific limitation on the embodiments of the present disclosure. The value of M and how to select from multiple candidate carriers can be set as needed.

It should be noted that in the embodiments of the present disclosure, S81 and S82 can be implemented alone or in combination with any other steps in the embodiments of the present disclosure, for example, in combination with S21 and S22 and/or S31 and S32 and/or S41 and S42 and/or S51 and S52 in the embodiments of the present disclosure, and embodiments of the present disclosure do not limit this.

By implementing the embodiments of the present disclosure, the terminal receives the configuration information sent by the network device, the configuration information is used to indicate the reselection threshold for the carrier reselection; the reselection threshold for the carrier reselection is determined according to the configuration information; in response to the carrier reselection being triggered based on the first carrier trigger, the reselection threshold is configured, and the keeping threshold is not configured, whether the second carrier is a candidate is determined based on the CBR of the second carrier other than the first carrier among the multiple carriers and reselection threshold. Thus, the terminal can determine the CBR of the carrier during the process of carrier selection and/or carrier reselection, and perform carrier reselection based on the reselection threshold configured by the network device, to ensure communication quality.

Referring to FIG. 9 , FIG. 9 is a flow chart of yet another method for determining channel busy ratio CBR provided by an embodiment of the present disclosure.

As shown in FIG. 9, the method is executed by a network device. The method may include but is not limited to the following steps.

At S91, first indication information and/or the second indication information is sent to a terminal, the first indication information is used to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met; the second indication information is configured to indicate a default resource pool, and the default resource pool is used by the terminal to determine the CBR of the carrier in a case that the condition for triggering the carrier selection or the carrier reselection is met.

In embodiments of the present disclosure, the network device may send the first indication information to the terminal. The first indication information is used to indicate the number N for randomly selecting CBRs from the CBRs corresponding to all resource pools. For example, N is 2, 3, 5, and so on.

The terminal receives the first indication information sent by the network device, and the first indication information is used to indicate the number N number N which is the number of CBRs randomly selected from CBRs corresponding to all resource pools. According to the first indication information, the terminal can determine to randomly select N CBRs from the CBRs corresponding to the resource pools, and determine the CBR of the carrier according to the N CBRs corresponding to the N resource pools when the condition for triggering carrier selection or carrier reselection is met.

For example, N is 2, and the terminal receives the first indication information sent by the network device, and the first indication information is used to indicate to randomly select 2 CBRs from the CBRs corresponding to all resource pools; the terminal can determine, according to the first indication information, to randomly select 2 CBRs from the CBRs corresponding to the resource pools.

In embodiments of the present disclosure, the second indication information sent by the network device to the terminal is used to indicate the default resource pool.

The terminal receives the default resource pool sent by the network device, and can determine the CBR of the carrier based on the CBR corresponding to the default resource pool when the condition for triggering the carrier selection or carrier reselection is met.

In some possible implementations, when one BWP is activated for the carrier, and one BWP is configured with multiple resource pools, the second indication information sent by the network device may indicate one of the multiple resource pools configured for the BWP as the default resource pool.

For example, the second indication information may indicate an identifier of one of the multiple resource pools configured for the BWP, such as a resource pool index, which is used to indicate a default resource pool in the multiple resource pools configured for the BWP by the terminal.

For example, the second indication information may also indicate whether a resource pool is the default resource pool. For example, whether a resource pool is the default resource pool may be indicated in a resource pool configuration, for example, by adding or reusing a relevant indicator parameter. When the parameter is a first specific value, it indicates that the resource pool is the default resource pool. When the parameter is not the first specific value but it is the second specific value, it indicates that the resource pool is not the default resource pool. For example, when the indicator parameter is set to 1, it indicates that the resource pool is the default resource pool; when the indicator parameter is not 1 but it is 0, it indicates that the resource pool is not the default resource pool. For example, when the indicator parameter is set to enabled, it indicates that the resource pool is the default resource pool; when the indicator parameter is set to disable, it indicates that the resource pool is not the default resource pool.

It should be noted that, when the second indication information sent by the network device indicates the default resource pool, the signaling/message in the related art, etc. may be reused, or new indication information may be used. Embodiments of the present disclosure do not impose specific restrictions on this.

In some embodiments, the network device sends the configuration information to the terminal, the configuration information is used to indicate a reselection threshold for the carrier selection or carrier reselection, and/or a keeping threshold for the carrier selection or carrier reselection.

In embodiments of the present disclosure, the network device sends the configuration information to the terminal, and the configuration information is used to indicate the reselection threshold for the carrier selection in LTE V2X or NR V2X or V2X in other communication systems. The terminal can determine the reselection threshold for performing the carrier selection based on the configuration information of the network device.

In embodiments of the present disclosure, the network device sends the configuration information to the terminal, and the configuration information is used to indicate the reselection threshold for the carrier reselection in LTE V2X or NR V2X or V2X in other communication systems. The terminal can determine the reselection threshold for performing the carrier reselection based on the configuration information of the network device.

In embodiments of the present disclosure, the network device sends the configuration information to the terminal, and the configuration information is used to indicate a keeping threshold for the carrier selection in LTE V2X or NR V2X or V2X in other communication systems. The terminal can determine the keeping threshold for performing the carrier selection based on the configuration information of the network device.

In embodiments of the present disclosure, the network device sends the configuration information to the terminal, and the configuration information is used to indicate the keeping threshold for the carrier reselection in LTE V2X or NR V2X or V2X in other communication systems. The terminal can determine the keeping threshold for performing the carrier reselection based on the configuration information of the network device.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the configuration information is used to indicate at least one of the following:
a reselection threshold for each cell;
a reselection threshold for each BWP;
a reselection threshold for each frequency; or
a reselection threshold for each terminal.

In embodiments of the present disclosure, the network device sends the configuration information to the terminal. The configuration information can indicate the reselection threshold for each cell for the carrier selection or carrier reselection. The terminal can determine different reselection thresholds in different cells.

In embodiments of the present disclosure, the network device sends the configuration information to the terminal. The configuration information can indicate the reselection threshold for each BWP for the carrier selection or carrier reselection. When different BWPs are activated for the carrier used by the terminal, different reselection thresholds can be determined.

In embodiments of the present disclosure, the network device sends the configuration information to the terminal. The configuration information can indicate the reselection threshold of each frequency for the carrier selection or carrier reselection. When the carriers used by the terminal are at different frequencies, different reselection thresholds can be determined.

In embodiments of the disclosure, the network device sends the configuration information to the terminal. The configuration information can indicate the reselection threshold for each terminal that performs the carrier selection or carrier reselection. Different terminals can correspond to different reselection thresholds.

In some embodiments, the configuration information is used to indicate a reselection threshold for each priority of each cell.

In embodiments of the present disclosure, the network device sends the configuration information to the terminal, the configuration information is used to indicate the reselection threshold of each priority of each cell for carrier selection or carrier reselection.

In some embodiments, the configuration information is used to indicate at least one of the following:
a keeping threshold for each cell;
a keeping threshold for each BWP;
a keeping threshold for each frequency; or
a keeping threshold for each terminal.

In embodiments of the present disclosure, the network device sends the configuration information to the terminal. The configuration information can indicate the keeping threshold for each cell for the carrier selection or carrier reselection. The terminal can determine different keeping thresholds in different cells.

In embodiments of the present disclosure, the network device sends the configuration information to the terminal. The configuration information can indicate the keeping threshold of each BWP for the carrier selection or carrier reselection. When different BWPs are activated for the carrier used by the terminal, different keeping thresholds can be determined.

In embodiments of the present disclosure, the network device sends the configuration information to the terminal. The configuration information can indicate the keeping threshold for each frequency for carrier selection or carrier reselection. When the carrier used by the terminal is located at different frequencies, different keeping thresholds can be determined.

In embodiments of the present disclosure, the network device sends the configuration information to the terminal. The configuration information can indicate the keeping threshold of each terminal that performs the carrier selection or carrier reselection. Different terminals can correspond to different keeping thresholds.

In some embodiments, the configuration information is used to indicate the keeping threshold for each priority of each cell.

In embodiments of the present disclosure, the network device sends the configuration information to the terminal, the configuration information is used to indicate the keeping threshold for each priority of each cell for the carrier selection or carrier reselection.

By implementing the embodiments of the present disclosure, the network device sends the first indication information and/or the second indication information to the terminal, the first indication information is used to indicate the number N which is a number of CBRs randomly selected from CBRs corresponding to all resource pools, N is a positive integer, and the CBR corresponding to the N resource pools is used by the terminal to determine the CBR of the carrier when the condition for triggering the carrier selection or carrier reselection is met; the second indication information is used to indicate the default resource pool, the default resource pool is used by the terminal to determine the CBR of the carrier when the condition for triggering the carrier selection or carrier reselection is met. Therefore, the terminal can determine the CBR of the carrier during the process of the carrier selection and/or carrier reselection.

Referring to FIG. 10, FIG. 10 is a flow chart of a carrier selection method provided by an embodiment of the present disclosure.

As shown in FIG. 10, the method is executed by the network device. The method may include but is not limited to the following steps.

At S101, first indication information and/or second indication information is sent to a terminal, the first indication information is used to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met; the second indication information is configured to indicate a default resource pool, and the default resource pool is used by the terminal to determine the CBR of the carrier in a case that the condition for triggering the carrier selection or the carrier reselection is met.

Relevant description of S101 may refer to the relevant description in the above embodiments, and will not be described again here.

At S102, configuration information is sent to the terminal, and the configuration information is used to indicate a reselection threshold for carrier selection or carrier reselection, and/or a keeping threshold for carrier selection or carrier reselection.

In embodiments of the present disclosure, the network device sends the configuration information to the terminal, and the configuration information is used to indicate the reselection threshold for the carrier selection in LTE V2X or NR V2X or V2X in other communication systems. The terminal can determine the reselection threshold for performing the carrier selection based on the configuration information of the network device.

In embodiments of the present disclosure, the network device sends the configuration information to the terminal, and the configuration information is used to indicate the reselection threshold for the carrier reselection in LTE V2X or NR V2X or V2X in other communication systems. The terminal can determine the reselection threshold for performing the carrier reselection based on the configuration information of the network device.

In embodiments of the present disclosure, the network device sends the configuration information to the terminal, and the configuration information is used to indicate the keeping threshold for the carrier selection in LTE V2X or NR V2X or V2X in other communication systems. The terminal can determine the keeping threshold for performing the carrier selection based on the configuration information of the network device.

In embodiments of the present disclosure, the network device sends the configuration information to the terminal, and the configuration information is used to indicate the keeping threshold for the carrier reselection in LTE V2X or NR V2X or V2X in other communication systems. The terminal can determine the keeping threshold for performing the carrier reselection based on the configuration information of the network device.

It should be noted that the above-mentioned embodiments are not exhaustive and are only illustrative of some embodiments. The above-mentioned embodiments can be implemented individually or in combination. The above-mentioned embodiments are only illustrative and do not serve as specific limitations on the scope of protection of the embodiments of the present disclosure.

In some embodiments, the configuration information is used to indicate at least one of the following:
a reselection threshold for each cell;
a reselection threshold for each BWP;
a reselection threshold for each frequency; or
a reselection threshold for each terminal.

In embodiments of the present disclosure, the network device sends the configuration information to the terminal. The configuration information can indicate the reselection threshold for each cell for the carrier selection or carrier reselection. The terminal can determine different reselection thresholds in different cells.

In embodiments of the present disclosure, the network device sends the configuration information to the terminal. The configuration information can indicate the reselection threshold for each BWP for the carrier selection or carrier reselection. When different BWPs are activated for the carrier used by the terminal, different reselection thresholds can be determined.

In embodiments of the present disclosure, the network device sends the configuration information to the terminal. The configuration information can indicate the reselection threshold of each frequency for the carrier selection or carrier reselection. When the carriers used by the terminal are at different frequencies, different reselection thresholds can be determined.

In embodiments of the disclosure, the network device sends the configuration information to the terminal. The configuration information can indicate the reselection threshold for each terminal that performs the carrier selection or carrier reselection. Different terminals can correspond to different reselection thresholds.

In some embodiments, the configuration information is used to indicate a reselection threshold for each priority of each cell.

In embodiments of the present disclosure, the network device sends the configuration information to the terminal, the configuration information is used to indicate the reselection threshold of each priority of each cell for carrier selection or carrier reselection.

In some embodiments, the configuration information is used to indicate at least one of the following:
a keeping threshold for each cell;
a keeping threshold for each BWP;
a keeping threshold for each frequency; or
a keeping threshold for each terminal.

In embodiments of the present disclosure, the network device sends the configuration information to the terminal. The configuration information can indicate the keeping threshold for each cell for the carrier selection or carrier reselection. The terminal can determine different keeping thresholds in different cells.

In embodiments of the present disclosure, the network device sends the configuration information to the terminal. The configuration information can indicate the keeping threshold of each BWP for the carrier selection or carrier reselection. When different BWPs are activated for the carrier used by the terminal, different keeping thresholds can be determined.

In embodiments of the present disclosure, the network device sends the configuration information to the terminal. The configuration information can indicate the keeping threshold for each frequency for carrier selection or carrier reselection. When the carrier used by the terminal is located at different frequencies, different keeping thresholds can be determined.

In embodiments of the present disclosure, the network device sends the configuration information to the terminal. The configuration information can indicate the keeping threshold of each terminal that performs the carrier selection or carrier reselection. Different terminals can correspond to different keeping thresholds.

In some embodiments, the configuration information is used to indicate the keeping threshold for each priority of each cell.

In embodiments of the present disclosure, the network device sends the configuration information to the terminal, the configuration information is used to indicate the keeping threshold for each priority of each cell for the carrier selection or carrier reselection.

It should be noted that in the embodiments of the present disclosure, S101 and S102 can be implemented alone, or they can be implemented in combination with any other steps in the embodiments of the present disclosure. For example, they can be implemented in conjunction with S91 in the embodiments of the present disclosure. Embodiments do not limit this.

By implementing the embodiments of the present disclosure, the network device sends the first indication information and/or the second indication information to the terminal, the first indication information is used to indicate the number N which is a number of CBRs randomly selected from CBRs corresponding to all resource pools, N is a positive integer, and the CBR corresponding to the N resource pools is used by the terminal to determine the CBR of the carrier when the condition for triggering the carrier selection or carrier reselection is met; the second indication information is used to indicate the default resource pool, the default resource The pool is used by the terminal to determine the CBR of the carrier when the condition for triggering the carrier selection or carrier reselection is met; the configuration information is sent to the terminal, the configuration information is used to indicate the reselection threshold for performing the carrier selection or carrier reselection, and/or the keeping threshold for performing the carrier selection or carrier reselection. As a result, the terminal can determine the CBR of the carrier during the process of the carrier selection and/or carrier reselection, and perform the carrier selection and/or carrier reselection based on the reselection threshold and/or keeping threshold configured at the network device to ensure communication quality.

In the above embodiments provided by the present disclosure, the methods provided by the embodiments of the present disclosure are introduced from the perspectives of terminal and network device respectively. In order to implement the various functions in the method provided by the above embodiments of the present disclosure, the terminal and the network device may include a hardware structure and a software module to implement the above functions in the form of a hardware structure, a software module, or a hardware structure plus a software module. A certain function among the above functions can be executed by a hardware structure, a software module, or a hardware structure plus a software module.

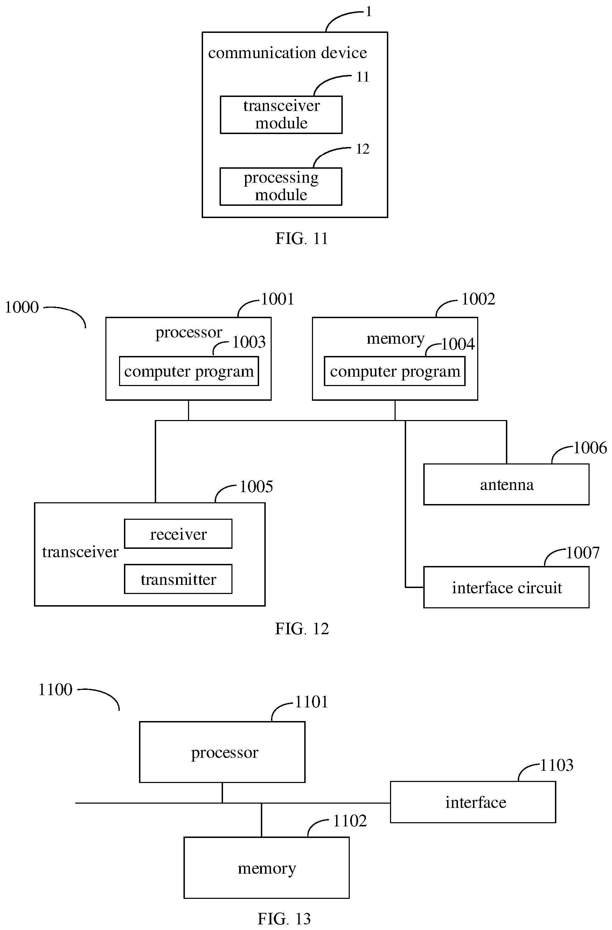

Referring to FIG. 11, FIG. 11 is a schematic structural diagram of a communication device 1 provided by an embodiment of the present disclosure. The communication device 1 shown in FIG. 11 may include a transceiver module 11 and a processing module 12. The transceiver module may include a sending module and/or a receiving module. The sending module is used to implement a sending function, and the receiving module is used to implement a receiving function. The transceiver module may implement the sending function and/or the receiving function.

The communication device 1 may be a terminal, a device in the terminal, or a device that can be used in conjunction with the terminal. Alternatively, the communication device 1 may be a network device, a device in the network device, or a device that can be used in conjunction with the network device.

The communication device 1 is the terminal.

The device includes: a processing module 12.

The processing module 12 is configured to determine a CBR corresponding to a resource pool in response to a condition for triggering carrier selection or carrier reselection being met, wherein an activated partial bandwidth (BWP) of a carrier is configured with at least one resource pool.

The processing module 12 is also configured to determine a CBR of the carrier according to the CBR corresponding to the resource pool.

In some embodiments, the processing module 12 is also configured to determine a CBR corresponding to each resource pool by performing a CBR measurement on each resource pool.

In some embodiments, the processing module 12 is further configured to perform at least one of the following:
determine an average value of CBRs corresponding to all resource pools as the CBR of the carrier;
determine a maximum value among the CBRs corresponding to all the resource pools as the CBR of the carrier;
determine a minimum value among the CBRs corresponding to all the resource pools as the CBR of the carrier;
randomly select one CBR from the CBRs corresponding to all the resource pools as the CBR of the carrier;
randomly select N CBRs from the CBRs corresponding to all the resource pools, and determining an average value of the N CBRs as the CBR of the carrier, where N is a positive integer;
randomly select N CBRs from the CBRs corresponding to all the resource pools, and determining a maximum value among the N CBRs as the CBR of the carrier, where N is a positive integer;
randomly select N CBRs from the CBRs corresponding to all the resource pools, and determining a minimum value among the N CBRs as the CBR of the carrier, where N is a positive integer; or
determine a default resource pool among all the resource pools, and determining a CBR corresponding to the default resource pool as the CBR of the carrier.

Further referring to FIG. 11, in some embodiments, the device further includes: a transceiver module 11.

The transceiver module 11 is configured to receive first indication information sent by the network device, the first indication information is used to indicate the N which is a number of CBRs randomly selected from the CBRs corresponding to all the resource pools.

The processing module 12 is further configured to determine, according to the first indication information, to randomly select the N CBRs from the CBRs corresponding to all the resource pools.

In some embodiments, the processing module 12 is also configured to determine a default resource pool among all resource pools; determine a CBR corresponding to the default resource pool by performing a CBR measurement on the default resource pool, and determine the CBR corresponding to the default resource pool as the CBR of the carrier.

In some embodiments, the transceiver module 11 is configured to receive second indication information sent by the network device, the second indication information is used to indicate the default resource pool.

The processing module 12 is also configured to determine the default resource pool according to the second indication information.

In some embodiments, the processing module 12 is also configured to receive configuration information sent by the network device, the configuration information is used to indicate a reselection threshold for performing the carrier selection or carrier reselection, and/or a keeping threshold for performing the carrier selection or the carrier reselection.

The processing module 12 is further configured to determine the reselection threshold for carrier selection or the carrier reselection and/or the keeping threshold for the carrier selection or the carrier reselection according to the configuration information.

In some embodiments, the processing module 12 is further configured to determine whether the carrier is a candidate carrier according to the CBR of the carrier and the reselection threshold.

In some embodiments, the configuration information is used to indicate at least one of the following:
a reselection threshold for each cell;
a reselection threshold for each partial bandwidth (BWP);
a reselection threshold for each frequency; or
a reselection threshold for each terminal.

In some embodiments, the processing module 12 is further configured to determine that the carrier is the candidate carrier in response to the CBR of the carrier being less than or equal to the reselection threshold.

In some embodiments, the configuration information is configured to indicate a reselection threshold for each priority of each cell.

In some embodiments, the processing module 12 is further configured to determine, according to the configuration information, a reselection threshold corresponding to a priority of each logical channel where there is data to be transmitted and the carrier selection and/or carrier reselection is triggered; in response to the CBR of the carrier being less than or equal to the reselection threshold corresponding to the priority of each logical channel where there is data to be transmitted and the carrier selection and/or carrier reselection is triggered, determine that the carrier is the candidate carrier.

In some embodiments, the processing module 12 is further configured to, in response to determining that the carrier reselection is triggered based on a first carrier, determine whether to reselect the first carrier according to a CBR of the first carrier and the keeping threshold.

In some embodiments, the configuration information is used to indicate at least one of the following:
a keeping threshold for each cell;
a keeping threshold for each partial bandwidth (BWP);
a keeping threshold for each frequency; or
a keeping threshold for each terminal.

In some embodiments, the processing module 12 is further configured to determine to reselect the first carrier in response to the CBR of the first carrier being less than or equal to the keeping threshold.

In some embodiments, the processing module 12 is further configured to determine not to reselect the first carrier in response to the CBR of the first carrier being greater than or equal to the keeping threshold.

In some embodiments, the configuration information is configured to indicate a keeping threshold for each priority of each cell.

In some embodiments, the processing module 12 is further configured to determine, according to the configuration information, a keeping threshold corresponding to a priority of each logical channel where there is data to be transmitted and the carrier selection and/or the carrier reselection is triggered; in response to the CBR of the carrier being less than or equal to the keeping threshold corresponding to the priority of each logical channel where there is data to be transmitted and the carrier selection and/or the carrier reselection is triggered, determine to reselect the first carrier.

In some embodiments, the processing module 12 is further configured to determine, according to the configuration information, a keeping threshold corresponding to a priority of each logical channel where there is data to be transmitted and the carrier selection and/or the carrier reselection is triggered; in response to the CBR of the carrier being greater than the keeping threshold corresponding to the priority of any logical channel where there is data to be transmitted and the carrier selection and/or the carrier reselection is triggered, determine not to reselect the first carrier.

In some embodiments, the processing module 12 is further configured to, in response to determining not to reselect the first carrier, determine whether a second carrier is a candidate carrier according to a CBR of a second carrier other than the first carrier among a plurality of carriers and the reselection threshold.

In some embodiments, the processing module 12 is further configured to, in response to determining that the carrier reselection is triggered based on the first carrier, the reselection threshold is configured, and the keeping threshold is not configured, determine whether a second carrier is a candidate carrier according to a CBR of a second carrier other than the first carrier among a plurality of carriers and the reselection threshold.

In some embodiments, the processing module 12 is further configured to determine that the second carrier is the candidate carrier in response to the CBR of the second carrier being less than or equal to the reselection threshold.

In some embodiments, the processing module 12 is further configured to, in response to the configuration information indicating a reselection threshold for each priority of each cell, determine, according to the configuration information, a reselection threshold corresponding to a priority of each logical channel where there is data to be transmitted and the carrier selection and/or the carrier reselection is triggered; and in response to the CBR of the second carrier being less than or equal to the reselection threshold corresponding to the priority of each logical channel where there is data to be transmitted and the carrier selection and/or the carrier reselection is triggered, determine that the second carrier is the candidate carrier

In some embodiments, the processing module 12 is further configured to, in response to there being a plurality of candidate carriers, select or reselect M of the plurality of candidate carriers, where M is a positive integer.

The communication device 1 is a network device:

The device includes: a transceiver module 11.

The transceiver module 11 is configured to send first indication information and/or second indication information to the terminal, the first indication information is configured to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met; the second indication information is configured to indicate a default resource pool, and the default resource pool is used by the terminal to determine the CBR of the carrier in a case that the condition for triggering the carrier selection or the carrier reselection is met.

In some embodiments, the transceiver module 11 is also configured to send configuration information to the terminal, the configuration information is configured to indicate a reselection threshold for performing the carrier selection or the carrier reselection, and/or a keeping threshold for performing the carrier selection or the carrier reselection

In some embodiments, the configuration information is used to indicate at least one of the following:
a reselection threshold for each cell;
a reselection threshold for each partial bandwidth (BWP);
a reselection threshold for each frequency; or
a reselection threshold for each terminal.

In some embodiments, the configuration information is configured to indicate a reselection threshold for each priority of each cell.

In some embodiments, the configuration information is used to indicate at least one of the following:
a keeping threshold for each cell;
a keeping threshold for each partial bandwidth (BWP);
a keeping threshold for each frequency; or
a keeping threshold for each terminal.

In some embodiments, the configuration information is configured to indicate a keeping threshold for each priority of each cell.

Regarding the communication device 1 in the above embodiments, the specific manner in which each module performs operations has been described in detail in the method embodiments, and will not be described in detail here.

The communication device 1 provided in the above embodiments of the present disclosure achieves the same or similar beneficial effects as the method for determining a CBR provided in some of the above embodiments, and will not be described again here.

Referring to FIG. 12, FIG. 12 is a block diagram of a communication device 1000 provided by an embodiment of the present disclosure. The communication device 1000 can be a network device or a terminal, or can be a chip, a chip system, or a processor that supports the network device to implement the above methods, or can be a chip, a chip system, or a processor that supports the terminal to implement the above methods. The communication device 1000 can be used to implement the methods described in the above method embodiments, details of which may refer to the description in the above method embodiments.

The communication device 1000 may include one or more processors 1001. The processor 1001 may be a general-purpose processor or a dedicated processor, such as, a baseband processor or a central processor. The baseband processor may be used for processing communication protocols and communication data. The central processor may be used for controlling the communication device (e.g., a network device, a baseband chip, a terminal, a terminal chip, a distributed unit (DU), or a central unit (CU)), executing a computer program, and processing data of the computer program.

Optionally, the communication device 1000 may include one or more memories 1002 on which a computer program 1004 may be stored. The memory 1002 executes the computer program 1004 to cause the communication device 1000 to perform the methods described in the above method embodiments. Optionally, the memory 1002 may also store data. The communication device 1000 and the memory 1002 can be provided separately or integrated together.

Optionally, the communication device 1000 may also include a transceiver 1005 and an antenna 1006. The transceiver 1005 may be referred to as a transceiver unit, a transceiver machine, or a transceiver circuit, for realizing a transceiver function. The transceiver 1005 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 1000 may include one or more interface circuits 1007. The interface circuits 1007 are used to receive code instructions and transmit them to the processor 1001. The processor 1001 runs the code instructions to cause the communication device 1000 to perform the method described in the method embodiments.

The communication device 1000 is a first terminal: the processor 1001 is used to perform S21 and S22 in FIG. 2; S31 and S32 in FIG. 3; S41 and S42 in FIG. 4; S52 in FIG. 5; and S62 in FIG. 6; S72 to S74 in FIG. 7; S82 in FIG. 8; The transceiver 1005 is used to perform S51 in FIG. 5; S61 in FIG. 6; S71 in FIG. 7; and S81 in FIG. 8.

The communication device 1000 is a network device: the transceiver 1005 is used to perform S91 in FIG. 9; and S101 and S102 in FIG. 10.

In an implementation, the processor 1001 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1001 may store a computer program 1003, and the computer program 1003 runs on the processor 1001, causing the communication device 1000 to perform the method described in the above method embodiments. The computer program 1003 may be solidified in the processor 1001, in which case the processor 1001 may be implemented by hardware.

In an implementation, the communication device 1000 may include circuits. The circuits may implement the sending, receiving or communicating functions in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can also be produced using various IC process technologies, such as a complementary metal oxide semiconductor (CMOS), n Metal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a terminal, but the scope of the communication device described in the disclosure is not limited thereto, and the structure of the communication device may not be limited by FIG. 12. The communication device may be a stand-alone device or may be part of a larger device. For example, the communication device may be:
(1) a stand-alone integrated circuit (IC), a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, FIG. 13 is structural diagram of the chip provided in an embodiment of the present disclosure.

The chip 1100 includes a processor 1101 and an interface 1103. There may be one or more processors 1101, and there may be multiple interfaces 1103.

For a case where the chip is used to implement the functions of the network device in the embodiments of the present disclosure:
the interface 1103 is used to receive code instructions and transmit them to the processor;
the processor 1101 is used to run the code instructions to perform the method for determining a CBR as described in some of the above embodiments.

For a case where the chip is used to implement the functions of the terminal in the embodiments of the present disclosure:
the interface 1103 is used to receive code instructions and transmit them to the processor;
the processor 1101 is used to run the code instructions to perform the method for determining a CBR as described in some of the above embodiments.

Optionally, the chip 1100 further includes a memory 1102, which is used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementation should not be construed as being beyond the scope of protection of the embodiments of the disclosure.

Embodiments of the present disclosure also provides a system for determining a CBR_{∘} The system includes the communication device as the terminal and the communication device as the network device in the embodiment of FIG. 11, or the system includes the communication device as the network device and the communication device as the terminal in the embodiment of FIG. 12.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on a computer, processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any available medium to which the computer is capable to access or a data storage device such as a server, data center that contains one or more available mediums integrated. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of the embodiments of the disclosure, nor to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondence relationships shown in the various tables in the disclosure can be configured or predefined. The values of information in each table are only examples and can be configured to other values, which are not limited by the disclosure. When configuring the correspondence relationships between information and various parameters, it is not necessary to configure all the correspondence relationships shown in each table. For example, in the tables in the disclosure, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and algorithm steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which is not elaborated herein.

The above are only detailed embodiments of the present disclosure, but the protection scope of the present disclosure is not limited thereto. Any skilled familiar with the technical field can easily think of changes or substitutions within the technical scope disclosed in the present disclosure, which should be covered by the protection scope of this disclosure. Therefore, the protection scope of the present disclosure should be subject to the protection scope of the claims.

## Claims

1. A method for determining a channel busy ratio (CBR), performed by a terminal, comprising:
in response to a condition for triggering carrier selection or carrier reselection being met, determining a CBR corresponding to a resource pool; wherein an activated partial bandwidth (BWP) of a carrier is configured with at least one resource pool; and
determining a CBR of the carrier according to the CBR corresponding to the resource pool.

2. The method of claim 1, wherein determining the CBR corresponding to the resource pool comprises:
determining a CBR corresponding to each resource pool by performing a CBR measurement on each resource pool; wherein determining the CBR of the carrier according to the CBR corresponding to the resource pool comprises at least one of:
determining an average value of CBRs corresponding to all resource pools as the CBR of the carrier;
determining a maximum value among the CBRs corresponding to all the resource pools as the CBR of the carrier;
determining a minimum value among the CBRs corresponding to all the resource pools as the CBR of the carrier;
randomly selecting one CBR from the CBRs corresponding to all the resource pools as the CBR of the carrier;
randomly selecting N CBRs from the CBRs corresponding to all the resource pools, and determining an average value of the N CBRs as the CBR of the carrier, where N is a positive integer;
randomly selecting N CBRs from the CBRs corresponding to all the resource pools, and determining a maximum value among the N CBRs as the CBR of the carrier, where N is a positive integer;
randomly selecting N CBRs from the CBRs corresponding to all the resource pools, and determining a minimum value among the N CBRs as the CBR of the carrier, where N is a positive integer; or
determining a default resource pool among all the resource pools, and determining a CBR corresponding to the default resource pool as the CBR of the carrier.

3. The method of claim 2, wherein randomly selecting the N CBRs from the CBRs corresponding to all the resource pools comprises:
receiving first indication information sent by a network device, wherein the first indication information is configured to indicate the N which is a number of CBRs randomly selected from the CBRs corresponding to all the resource pools; and
determining, according to the first indication information, to randomly select the N CBRs from the CBRs corresponding to all the resource pools.

4. The method of claim 1, wherein determining the CBR corresponding to the resource pool and determining the CBR of the carrier according to the CBR corresponding to the resource pool comprises:
determining a default resource pool among all resource pools;
determining a CBR corresponding to the default resource pool by performing a CBR measurement on the default resource pool; and
determining the CBR corresponding to the default resource pool as the CBR of the carrier.

5. The method of claim 2 or 4, wherein determining the default resource pool among all the resource pools comprises:
receiving second indication information sent by a network device, wherein the second indication information is configured to indicate the default resource pool; and
determining the default resource pool according to the second indication information.

6. The method of any one of claims 1 to 5, further comprising:
receiving configuration information sent by a network device, wherein the configuration information is configured to indicate a reselection threshold for performing the carrier selection or the carrier reselection, and/or a keeping threshold for performing the carrier selection or the carrier reselection; and
determining the reselection threshold for performing the carrier selection or the carrier reselection and/or the keeping threshold for performing the carrier selection or the carrier reselection according to the configuration information.

7. The method of claim 6, further comprising:
determining whether the carrier is a candidate carrier according to the CBR of the carrier and the reselection threshold.

8. The method of claim 6 or 7, wherein the configuration information is configured to indicate at least one of:
a reselection threshold for each cell;
a reselection threshold for each partial bandwidth (BWP);
a reselection threshold for each frequency; or
a reselection threshold for each terminal.

9. The method of claim 8, wherein determining whether the carrier is the candidate carrier according to the CBR of the carrier and the reselection threshold comprises:
in response to the CBR of the carrier being less than or equal to the reselection threshold, determining that the carrier is the candidate carrier.

10. The method of claim 6 or 7, wherein the configuration information is configured to indicate a reselection threshold for each priority of each cell.

11. The method of claim 10, wherein determining whether the carrier is the candidate carrier according to the CBR of the carrier and the reselection threshold comprises:
determining, according to the configuration information, a reselection threshold corresponding to a priority of each logical channel where there is data to be transmitted and the carrier selection and/or the carrier reselection is triggered; and
in response to the CBR of the carrier being less than or equal to the reselection threshold corresponding to the priority of each logical channel where there is data to be transmitted and the carrier selection and/or the carrier reselection is triggered, determining that the carrier is the candidate carrier.

12. The method of any one of claims 6 to 11, further comprising:
in response to determining that the carrier reselection is triggered based on a first carrier, determining whether to reselect the first carrier according to a CBR of the first carrier and the keeping threshold.

13. The method of claim 12, wherein the configuration information is configured to indicate at least one of:
a keeping threshold for each cell;
a keeping threshold for each partial bandwidth (BWP);
a keeping threshold for each frequency; or
a keeping threshold for each terminal.

14. The method of claim 13, wherein determining whether to reselect the first carrier according to the CBR of the first carrier and the keeping threshold comprises:
in response to the CBR of the first carrier being less than or equal to the keeping threshold, determining to reselect the first carrier; and
in response to the CBR of the first carrier being greater than the keeping threshold, determining not to reselect the first carrier.

15. The method of claim 12, wherein the configuration information is configured to indicate a keeping threshold for each priority of each cell.

16. The method of claim 15, wherein determining whether to reselect the first carrier according to the CBR of the first carrier and the keeping threshold comprises:
determining, according to the configuration information, a keeping threshold corresponding to a priority of each logical channel where there is data to be transmitted and the carrier selection and/or the carrier reselection is triggered;
in response to the CBR of the carrier being less than or equal to the keeping threshold corresponding to the priority of each logical channel where there is data to be transmitted and the carrier selection and/or the carrier reselection is triggered, determining to reselect the first carrier; and
in response to the CBR of the carrier being greater than the keeping threshold corresponding to the priority of any logical channel where there is data to be transmitted and the carrier selection and/or the carrier reselection is triggered, determining not to reselect the first carrier.

17. The method of claim 14 or 16, further comprising:
in response to determining not to reselect the first carrier, determining whether a second carrier is a candidate carrier according to a CBR of a second carrier other than the first carrier among a plurality of carriers and the reselection threshold.

18. The method of any one of claims 6 to 11, further comprising:
in response to determining that the carrier reselection is triggered based on the first carrier, the reselection threshold is configured, and the keeping threshold is not configured, determining whether a second carrier is a candidate carrier according to a CBR of a second carrier other than the first carrier among a plurality of carriers and the reselection threshold.

19. The method of claim 17 or 18, wherein determining whether the second carrier is the candidate carrier according to the CBR of the second carrier other than the first carrier among the plurality of carriers and the reselection threshold comprises:
in response to the CBR of the second carrier being less than or equal to the reselection threshold, determining that the second carrier is the candidate carrier; or,
in response to the configuration information indicating a reselection threshold for each priority of each cell, determining, according to the configuration information, a reselection threshold corresponding to a priority of each logical channel where there is data to be transmitted and the carrier selection and/or the carrier reselection is triggered; and in response to the CBR of the second carrier being less than or equal to the reselection threshold corresponding to the priority of each logical channel where there is data to be transmitted and the carrier selection and/or the carrier reselection is triggered, determining that the second carrier is the candidate carrier.

20. The method of claim 9, 11 or 19, further comprising:
in response to there being a plurality of candidate carriers, selecting or reselecting M of the plurality of candidate carriers, where M is a positive integer.

21. A method for determining a channel busy ratio (CBR), performed by a network device, comprising:
sending first indication information and/or second indication information to a terminal, wherein the first indication information is configured to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met;
wherein the second indication information is configured to indicate a default resource pool, and the default resource pool is used by the terminal to determine the CBR of the carrier in a case that the condition for triggering the carrier selection or the carrier reselection is met.

22. The method of claim 21, further comprising:
sending configuration information to the terminal, wherein the configuration information is configured to indicate a reselection threshold for performing the carrier selection or the carrier reselection, and/or a keeping threshold for performing the carrier selection or the carrier reselection.

23. The method of claim 22, wherein the configuration information is configured to indicate at least one of:
a reselection threshold for each cell;
a reselection threshold for each partial bandwidth (BWP);
a reselection threshold for each frequency; or
a reselection threshold for each terminal.

24. The method of claim 22, wherein the configuration information is configured to indicate a reselection threshold for each priority of each cell.

25. The method of any one of claims 22 to 24, wherein the configuration information is configured to indicate at least one of:
a keeping threshold for each cell;
a keeping threshold for each partial bandwidth (BWP);
a keeping threshold for each frequency; or
a keeping threshold for each terminal.

26. The method of any one of claims 22 to 24, wherein the configuration information is configured to indicate a keeping threshold for each priority of each cell.

27. A communication device, comprising:
a processing module, configured to, in response to a condition for triggering carrier selection or carrier reselection being met, determine a CBR corresponding to a resource pool; wherein an activated partial bandwidth (BWP) of a carrier is configured with at least one resource pool;
wherein the processing module is further configured to determine a CBR of the carrier according to the CBR corresponding to the resource pool.

28. A communication device, comprising:
a transceiver module, configured to send first indication information and/or second indication information to a terminal, wherein the first indication information is configured to indicate a number N which is a number of CBRs randomly selected from CBRs corresponding to all resource pools, where N is a positive integer, and the N CBRs corresponding to the resource pools are used by the terminal to determine a CBR of a carrier in a case that a condition for triggering carrier selection or carrier reselection is met; the second indication information is configured to indicate a default resource pool, and the default resource pool is used by the terminal to determine the CBR of the carrier in a case that the condition for triggering the carrier selection or the carrier reselection is met.

29. A computer-readable storage medium for storing instructions that, when executed, case the method according to any one of claims 1 to 20 to be performed, or that, when executed, cause the method according to any one of claims 21 to 26 to be performed.
